(19) Europäisches Patentamt
European Patent Office
Office européen des brevets

(11) **EP 4 600 761 A1**

(12) **EUROPEAN PATENT APPLICATION**

(43) Date of publication:
**13.08.2025   Bulletin 2025/33**

(21) Application number: **24163946.7**

(22) Date of filing: **15.03.2024**

(51) International Patent Classification (IPC):
*G04F 5/14* (2006.01)        *B82B 1/00* (2006.01)
*B82B 3/00* (2006.01)        *B82Y 10/00* (2011.01)
*B82Y 20/00* (2011.01)       *G01C 19/60* (2006.01)
*G01R 33/26* (2006.01)       *G06N 10/40* (2022.01)
*G21K 1/00* (2006.01)

(52) Cooperative Patent Classification (CPC):
**G04F 5/14; B82B 1/00; B82B 3/0061; G01C 19/60;
G06N 10/40; G21K 1/003; G21K 1/006;** B82Y 10/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.02.2024   EP 24156634**

(71) Applicant: **Alpine Quantum Technologies GmbH
6020 Innsbruck (AT)**

(72) Inventors:
• **Holz, Philip
  6020 Innsbruck (AT)**

• **Jacob, Georg
  6020 Innsbruck (AT)**
• **Erhard, Alexander
  6020 Innsbruck (AT)**

(74) Representative: **Grünecker Patent- und
Rechtsanwälte
PartG mbB
Leopoldstraße 4
80802 München (DE)**

Remarks:
Amended claims in accordance with Rule 137(2)
EPC.

(54) **SCALABLE ARCHITECTURE FOR A TRAPPED-ION QUANTUM INFORMATION PROCESSOR**

(57)    The present disclosure provides ion trapping systems with a scalable architecture and methods that use such an ion trapping system for entangling ions trapped in different linear trapping zones. For instance, an ion trapping system that comprises alternating current (AC) electrodes arranged for generating a first and a second mutually different linear trapping zone is provided. The AC electrodes are arranged to generate the first and the second linear trapping zone such that: (i) the first and the second linear trapping zone run besides each other in an interaction region for performing quantum operations between first ions trapped in the first linear trapping zone and second ions trapped in the second linear trapping zone; and (ii) in a transition region, in which the first and the second linear trapping zone lead away from one end of the interaction region, a distance between the first and the second linear trapping zone increases away from the one end of the interaction region.

Fig. 4

EP 4 600 761 A1

## Description

TECHNICAL FIELD

Embodiments of the present invention relate to the field of ion trapping.

BACKGROUND

In many technical applications (e.g. quantum computing, quantum simulations, atomic and molecular experiments, spectroscopy, atomic clocks, metrology, etc.), trapping of ions and subsequent manipulation of the trapped ions play an important role.

For example, in the field of quantum computing, trapped ions are used to represent qubits, and quantum computations are performed by irradiating the ions with appropriate laser beams. An important aspect in such applications, in particular in those related to quantum information processing is the implementation of unitary operations on one or more qubits represented by respective trapped ions. In the context of quantum computing, these unitary operations are also known as quantum gates and are used as the building blocks of quantum algorithms, performing the respective quantum computations. Quantum gates that perform unitary operations on two or more ion qubits are of particular importance since they can be used to generate entangled states of two or more ions that are initially in an unentangled state.

However, it is currently difficult to implement quantum gates with high fidelity when many ions are trapped in a single trapping region (cf. e.g. [1]). Therefore, trapped-ion quantum information processors (TIQIP) based on macroscopic traps, where ions are stored in a common trapping potential, are typically limited to a few tens of qubits.

*Cited Literature*

[1] Holz, P. C., Auchter, S., Stocker, G., Valentini, M., Lakhmanskiy, K., Rössler, C., ... & Blatt, R. (2020). "2D linear trap array for quantum information processing"; Advanced Quantum Technologies, 3(11), 2000031

[2] Harlander, M., Lechner, R., Brownnutt, M. et al. "Trapped-ion antennae for the transmission of quantum information". Nature 471, 200-203 (2011); https://doi.org/10.1038/nature09800

SUMMARY

It may be desirable to provide an ion trap architecture that allows to scale up the number of qubits in a trapped-ion quantum information processors (TIQIP).

In some embodiments, this is achieved by an ion trap architecture with plurality of linear trapping zones. More specifically, the ion trap architecture provides an arrangement of linear traps with "*radial interaction zones*" between adjacent traps, where these traps are converging towards each other to enable coherent quantum interactions between qubits in these adjacent traps. Inter-zone operations between ions in different trapping zones can thus be performed by transporting ions, within a linear trapping zone, near ions trapped in another linear trapping zone. Within a linear trapping zone, the ions can also be moved away from the other linear trapping zone (and thus also away from electromagnetic fields of the other linear trapping zone.)

The invention is defined by the independent claims. Some of the advantageous embodiments are subject matter to the dependent claims.

In some embodiments of the invention, an ion trapping system is provided. The ion trapping system comprises alternating current (AC) electrodes arranged for generating a first and a second mutually different linear trapping zone. In an interaction region for performing quantum operations between first ions trapped in the first linear trapping zone and second ions trapped in the second linear trapping zone, the first and the second linear trapping zone run besides each other. In a transition region in which the first and the second linear trapping zone lead away from one end of the interaction region, a distance between the first and the second linear trapping zone increases away from the one end of the interaction region.

Details of one or more embodiments are set forth in the accompanying drawings and the description below. Other features, objects, and advantages will be apparent from the description, drawings, and claims. Features or subsets of features disclosed in the specification and drawings may individually obtain one or more of these advantages and, thus, need not all be provided in order to obtain said advantages.

BRIEF DESCRIPTION OF THE DRAWINGS

In the following embodiments of the invention are described in more detail with reference to the attached figures and drawings, in which:

Fig. 1   is a schematic drawing illustrating an exemplary quantum charge-coupled device (QCCD) ion trap architecture;

Fig. 2   is a schematic drawing illustrating an exemplary ion trap architecture with a plurality of parallel linear surface traps;

Fig. 3   is a schematic drawing illustrating an exemplary elementary building block of an ion surface trap architecture according to the present disclosure;

Fig. 4   is a schematic drawing illustrating further conceptual details of the elementary building block of Fig. 3;

Fig. 5      is a schematic drawing illustrating an exemplary radio-frequency trapping configuration (RF electric field) generated at the section S2 in Fig. 4 (two-dimensional cut);

Fig. 6      is a schematic drawing illustrating an exemplary radio-frequency trapping configuration (RF electric field) generated at the section S1 in Fig. 4;

Fig. 7      is a schematic drawing illustrating shuttling of ions between different parts of the respective linear trapping zones;

Fig. 8      is a schematic drawing illustrating an exemplary small-scale application of the elementary building block in Figs. 3 and 4, in which the first and the second RF null are part of the same closed RF null loop;

Fig. 9      is a schematic drawing illustrating is an exemplary topology for scaling up the elementary buildings block shown in Figs. 3 and 4;

Fig. 10a    is a schematic drawing illustrating an elementary block, in which only one of the linear trapping zones is curved;

Fig. 10b    is a schematic drawing illustrating an exemplary topology for scaling up the elementary building block shown in Fig. 10a;

Fig. 10c    is a schematic drawing illustrating an exemplary topology for further scaling up the topology shown in Fig. 10b;

Fig. 11     is a flowchart illustrating exemplary steps of a method for entangling ions using an ion trapping system according to the present disclosure;

Fig. 12     is a schematic drawing illustrating an exemplary elementary building block of an ion 3D trap architecture according to the present disclosure;

Fig. 13     is a schematic drawing illustrating further conceptual details of the elementary building block of Fig. 12;

Fig. 14     is a schematic drawing illustrating an exemplary radio-frequency trapping configuration (RF electric field) generated at the section S2 in Fig. 13 (two-dimensional cut); and

Fig. 15     is a schematic drawing illustrating an exemplary radio-frequency trapping configuration (RF electric field) generated at the section S1 in Fig. 13.

It is to be expressly understood, however, that the drawings are for the purpose of illustration and description only and are not intended as a definition of the limits of the disclosed subject matter. Furthermore, it is noted that identical reference signs refer to identical or at least functionally equivalent features.

DETAILED DESCRIPTION

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

It is understood that the features of the various exemplary embodiments and/or aspects described herein may be combined with each other, unless specifically noted otherwise.

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one". Furthermore, as used herein, the term "set" is intended to include one or more items (e.g., related items, unrelated items, a combination of related and unrelated items, and/or the like) and may be used interchangeably with "one or more" or "at least one". Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise.

As mentioned above, it is currently difficult to implement quantum gates with high fidelity when many ions are trapped in a single trapping region. Therefore, a common approach is to have multiple (often linear) trapping zones, each containing only a small number of trapped ions which can thus be manipulated with high fidelity. Quantum information between ions trapped in different trapping zones may then be exchanged by splitting, shuttling and merging of ions strings. In other words, quantum information is exchanged between different trapping zones, by transporting ions from different trapping zones, into a same trapping zone and then performing entangling operations on these ions.

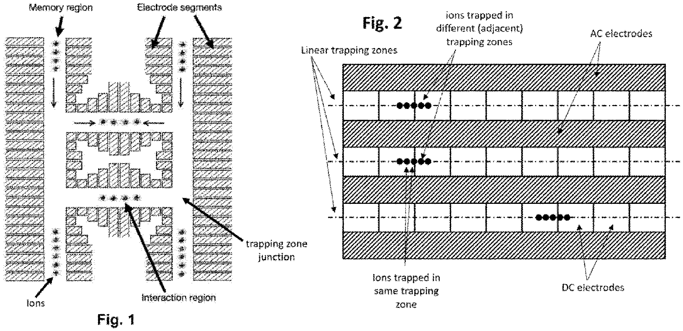

An example of this approach to scale-up the qubit number in a TIQIP is illustrated in Fig. 1. More specifically, Fig. 1 shows a so-called quantum charge-coupled device (QCCD) in which the ion-qubit registers are distributed over several trapping zones that are realized on a common device, e.g. a microfabricated trap-chip. Scalable processors are envisaged to comprise multiple segmented linear traps connected by "*junctions*". To connect the distributed qubit sub-registers, strings of ion-qubits can be physically moved through the junctions by means of electrically controlled ion-transport operations using DC control voltages.

However, these transport operations need to be extremely well controlled to keep the motional excitation of the ion string low. Residual excitation, which is a particular problem for transport through junctions, prevents the direct application of high-fidelity entangling operations subsequent to the transport operations, creating overhead in terms of additional (sympathetic) cooling steps. For long strings of ion-qubits, shuttling through junctions with negligible motional excitation may not be feasible at all. A restriction to small ion strings with only a few ions, where well-controlled transport has been demonstrated, causes a large overhead in required shuttling operations to redistribute the qubit register for gate operations, which in turn decreases the execution time of quantum circuits.

As an alternative to the QCCD architecture, periodic arrangements of arrays of linear traps as illustrated in Fig. 2 have been proposed. In such an arrangement, entanglement between ion-qubits in adjacent linear surface traps is not realized by transport through junctions into a same linear trapping zone, but rather mediated over a distance employing a dipole-dipole-type Coulomb coupling. In other words, in contrast to the QCCD, quantum gates involving ions trapped in different trapping zones are implemented. When applying this principle on an ion-lattice quantum processor based on parallel linear traps, at least two different approaches have been proposed[1]:

One approach is to use an ion lattice that has small trap spacings s (i.e. small distance between adjacent linear trapping zones) with sufficient motional coupling between ions in adjacent trapping zones at all times. However, this approach leads to a small ion-surface separation d between the trapped ions and the surface of the trap, which leads to an increase of the heating rates and thus reduced gate fidelities.

Another approach is to use an ion lattice that has relatively large trap spacings s and to only temporarily decrease the spacing s between two adjacent trapping zones when inter-zone quantum operations are to be performed. For instance, ion-shuttling by means of amplitude and phase control of RF trapping potentials has been suggested to realize the required motional coupling strength. However, controlling the RF voltages creates significant overhead in terms of electric supply requirements.

It thus remains a major challenge to scale up the number of qubits in a trapped-ion quantum information processors (TIQIP) efficiently (e.g. without (substantial) reduction in processing time or gate fidelity, and without (substantial) increase of motional heating, technical overhead for drive electronics and the like).

In view of the above-mentioned problems with current-ion trap architectures, a scalable architecture for a TIQIP that avoids some or all of the above drawbacks is provided.

In particular, in accordance with an embodiment, an ion trapping system that comprises a (scalable) elementary building block, as further described below, is provided. The ion trapping system may also be provided with or include a control unit that controls the voltages applied to the AC and/or DC electrodes. Such a control unit may also control one or more lasers to generate laser beams for performing the quantum operations on the trapped ions.

Furthermore, a corresponding method for trapping and/or entangling ions using such an ion trapping system is provided. Furthermore, a computer program which, when executed by one or more processors, causes such a trapping and/or entangling method to be performed. For instance, the computer program, when executed, may cause the generation of (i) appropriate control signals for laser units to generate appropriate laser beams to perform quantum operations on trapped ions; and/or (ii) appropriate control signals for the AC electrodes to generate the linear trapping zones; and/or (iii) appropriate control signals for the DC electrodes to transport trapped ions along the RF nulls. Such a computer program may e.g. be run on processors(s) of the just-mentioned control unit of the ion trapping system.

### *Elementary Building Block*

The ion trapping system according to the present disclosure comprises one or more "*elementary building blocks*". Such an elementary building block includes an "*interaction region*", in which two linear trapping zones run (sufficiently close) besides each other so that quantum operations between ions trapped in the different linear trapping zones can be performed. Furthermore, the elementary building block includes a transition region, in which the two linear trapping zones are curved away from each other.

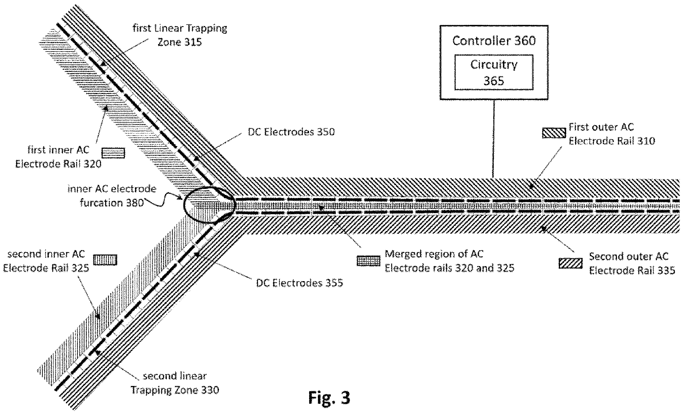

Further details are now explained below also with reference to **Fig. 3,** which shows a schematic drawing of an exemplary elementary building block for an ion trapping system that includes a plurality of linear surface traps.

### *Linear Trapping Zones*

In general, an elementary building block of the ion trapping system comprises alternating current (AC) electrodes. The AC electrodes are arranged for (e.g. suitable for) generating a plurality of mutually different linear trapping zones. In other words, the AC electrodes are arranged such that, by applying (appropriate) AC voltages to the AC electrodes, said mutually different linear trapping zone can be generated.

Accordingly, the mutually different linear trapping zones include at least two linear trapping zones, in the present disclosure referred to as "*first linear trapping zone*" and "*second linear trapping zone*" (or first and second RF null, respectively). Furthermore, ions trapped in the first linear trapping zone are referred to as "*first ions*", and ions trapped in the second linear trapping zone are referred to as "*second ions*".

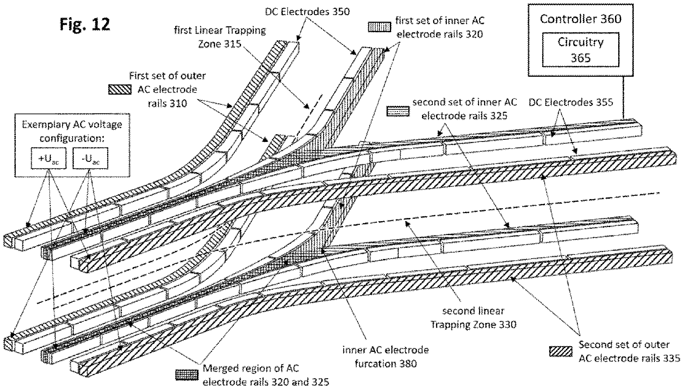

In the present disclosure (e.g. in Fig. 3), it is often exemplarily assumed that these AC electrodes are arranged on a (e.g. the same) trap surface. In other words, the ion trapping system may be or include one or more (linear) ion surface traps. However, the present disclosure is not limited thereto and applies in general to any ion trapping system with AC electrodes arranged to generate (by applying AC voltages) linear trapping zones along which trapped ions can be transported. In particular, as further explained below with reference to Figs. 12 to 15, the present inventions may also be implemented using an arrangement of linear 3D traps, in which ions are also confined radially using an alternating (AC) electric field and confined axially by static (DC) electric potentials.

In general, the AC electrodes are arranged to generate (when AC voltages are applied) a dynamically confining force (ponderomotive force) that spatially confines ions to a line in a so-called pseudo potential. In the present disclosure, such lines to which one or more ions are confined (or "*trapped*") by AC electrodes are referred to as "*linear trapping zones*". In other words, the AC electrodes are responsible (only) for the *radial* confinement to one-dimensional lines, but allow *axial* movement along said lines (which usually is controlled by DC electrodes). A linear trapping zone thus corresponds to a minimum of the effective pseudo potential generated by the AC electrodes.

As illustrated in Fig. 3, an ion trapping system according to the present disclosure may be provided together with a controller 360. As illustrated, the controller 360 may include circuitry 365, configured to apply, in operation, AC voltages to the AC electrodes of the ion trapping system (which may include a plurality of elementary building blocks as further described below) so that the AC electrodes generate RF nulls as described herein. In general, the controller 360 may include other hardware and/or software including by not limit to functions like (i) controlling DC electrodes for transporting ions along RF nulls, (ii) controlling laser beams for implementing inter-zone quantum operations further described below, and/or (iii) controlling laser beams for implementing intra-zone quantum operations further described below.

It is noted that the controller 360 may be implemented by any hardware means, apart from using a general purpose processor, it can be implemented as a micro-controller, by means of a programmable hardware such as field programmable gate array (FPGA) or as a specialized hardware such as an application-specific integrated circuit (ASIC). Any combination of the above-mentioned hardware and possibly a software may be used.

Merely since the applied AC voltages typically oscillate with radio frequency (RF), such a minimum is also referred to as RF null. The present disclosure, is however, not limited to any particular frequency of the applied AC voltages. Accordingly, the present disclosure uses the terms "*linear trapping zone*" and "*RF null*" interchangeably, unless context indicates otherwise.

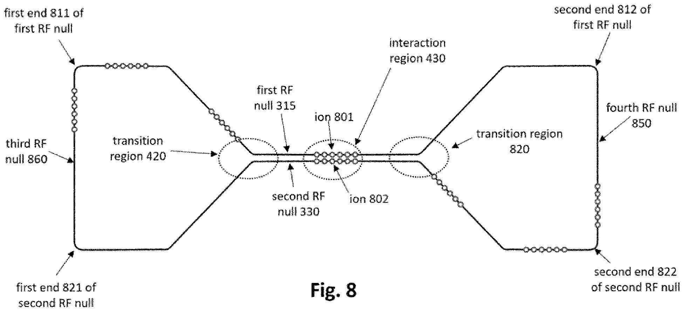

It is further noted that "*mutually different*" does not necessarily mean that two mutually different linear trapping zones must not be connected with each other. In other words, two mutually different linear trapping zones may be different segments of the same RF null (i.e. different portions or different parts of the same RF null). In particular, it may be possible to transport a trapped ion from one linear trapping zone along an RF null into another linear trapping zone. In other words, the first and second RF null may be part of the same closed RF null loop. Such a topology, in which the first and second linear trapping zone of the elementary building block form a closed loop is illustrated in **Fig. 8,** further described below.

As illustrated in **Fig. 3,** an elementary building block may include two (mutually different) linear trapping zones, which, in the present disclosure, are referred to as first and second linear trapping zone. In Fig. 3, said first and second linear trapping zones are indicated by respective dashed lines and respectively have the reference numerals 315 and 330. Accordingly, the elementary building block includes AC electrodes that are arranged to form two or more linear ion traps and/or to generate, when AC voltages are applied, the first and second linear trapping zones.

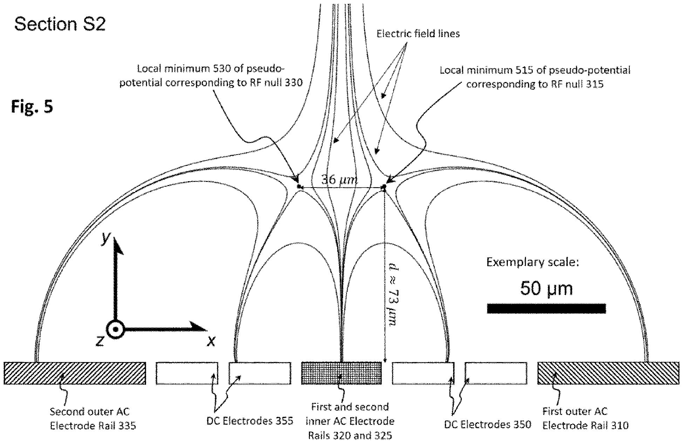

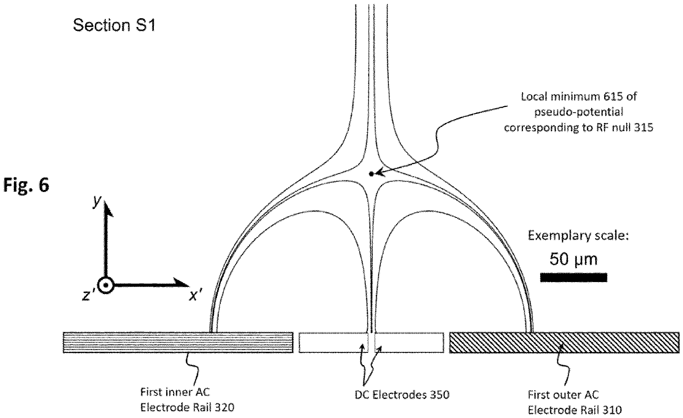

As also illustrated in **Fig. 3,** in case of two linear surface traps, these electrodes may be arranged on a same surface (e.g. of some substrate) and the linear trapping zones 315 and 330 are in general above that surface (cf. Fig. 5 and 6).

More specifically, the AC electrodes form: (i) a first linear surface trap for generating the first linear trapping zone, and (ii) a second linear surface trap for generating the second linear trapping zone. For instance, there may be two first AC electrode rails forming the first linear surface trap and/or for generating the first linear trapping zone; and two second AC electrode rails forming the second linear surface trap and/or for generating the second linear trapping zone. It is further noted that, as illustrated in Fig. 3, 4 and 5, the first 320 and the second inner AC electrode rail 325 may, in the interaction region and part of the transition region, be merged to one inner AC electrode rail.

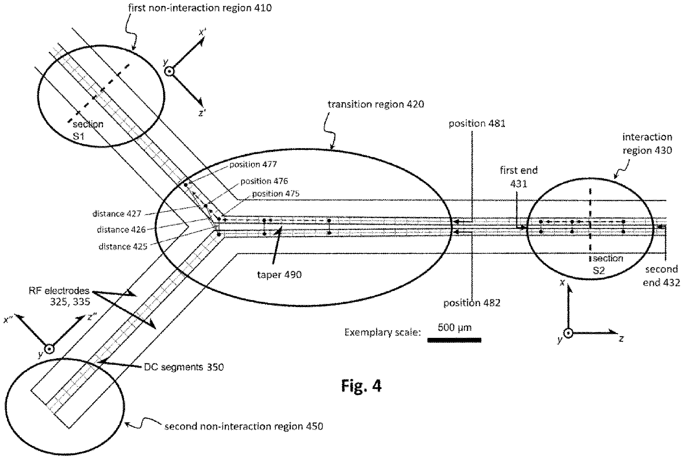

In the present disclosure the term **"electrode rail"** may refer to one single continuous electrode (as typically used for the AC electrodes) or may comprise a plurality of individual electrodes (or electrode segments as e.g. illustrated in Figs. 3 and 4 for the DC electrodes 350, and 355). In particular, to facilitate ion shuttling and/or axial confinement, DC electrode rails are typically segmented. An electrode rail typically extends along a corresponding RF null (e.g. extends on the traps surface besides or on a line, wherein said corresponds to the projection of the respective RF onto the trap surface).

For instance, in Figs. 3 and 4, the first outer AC Electrode Rail 310 is a continuous electrode rail that runs besides/along (and thus extends along) the projection of the RF null 330 onto the trap surface. Furthermore, in Figs. 3 and 4, DC electrode rail 350 includes a plurality of individual electrode segments that are arranged besides/along (and thus extend along) the projection of the RF null 330 onto the trap surface. In order to allow generation of a field component orthogonal to the RF-null, the DC electrodes in the example shown in Figs. 3 and 4 are segmented (i.e. segmented in pairs) also in the direction orthogonal to the trap axis.

For instance, as illustrated in Figs. 3 and 4, the two first AC electrode rails may include a first outer AC electrode rail 310 and a first inner AC electrode rail 320; and the two second AC electrode rails include a second inner AC electrode rail 325 and a second outer AC electrode rail 335. More specifically, the first and the second inner AC electrode rails 320, 325 are arranged between the first 310 and second outer electrode rails 330. More specifically, as illustrated in Fig. 3 and 4: (i) the first inner AC electrode rail 320 is arranged between the first outer AC electrode rail 310 and the second inner AC electrode rail 325; and (ii) the second inner AC electrode rail 325 is arranged between the second outer AC electrode rail 335 and the first inner electrode rail 320.

Here it is to be noted that "*arranged between*" does not necessarily mean that the respective electrode rail runs directly next to the electrodes between which it is arranged. For instance (as in the example shown in Figs. 3 and 4), between the first inner AC electrode rail 320 and the first outer AC electrode rail 310 there may be a rail of DC electrodes 350; and/or between the second inner AC electrode rail 325 and the second outer AC electrode rail 335 there may be a rail of DC electrodes 355.

The first AC electrode rails 310 and 320 are arranged for generating the first linear trapping zone 315, and the second AC electrode rails 325 and 335 are arranged for generating the second linear trapping zone 330. It is noted that this does not mean that e.g. AC voltages applied to electrodes of the second electrode rails do not influence/change/shift the path of the first linear trapping zone (in particular since the range of the electromagnetic force is not limited). In particular in the interaction region 430, the voltages applied to the first AC electrodes may have to be determined taking into account the voltages applied to the second AC electrodes (and vice versa). Furthermore, when determining the voltages to be applied to the DC electrode segments 350 the voltages applied to (in particular nearby) segments of the DC electrode rail 355 may be taken into account.

As also illustrated in Figs. 3 and 4, the first AC electrode rails 310 and 320 may extend from the interaction region 430, through the transition region 420, into the first non-interaction region 410; and the two second AC electrode rails 325 and 335 may extend from the interaction region 430, through the transition region 420, into a second non-interaction region 450. Details and purpose of these regions is explained in more detail below.

### Ion Transport

In general, individual ions, multiple ions, and/or or entire ion crystals may be moved (or shuttled or transported) along linear trapping zones, in particular into and out of interaction zones by utilizing standard ion transport schemes with DC control voltages.

Accordingly, the ion trapping system may comprise direct current (DC) electrodes arranged for moving/transporting trapped ions along one or more (or even each) RF null. In case of an ion surface trap, the DC electrodes may be arranged to the trap surface (on which the AC electrodes are arranged).

In general, to facilitate ion transport within one linear trap, there may be a plurality of DC electrodes arranged for (e.g. suitable for) creating multiple trapping wells on the RF null of the linear trap. In other words, the DC electrodes can be used to generate local potential energy minima in the axial direction on the RF null). In order to transport ions along an RF null, these local potential energy minima may be moved in the direction into which the ions are to be transported. The ions located at the position of such a minimum may then follow the movement of the minimum along the RF null.

In particular, in order to shuttle ions along an RF null, there may be a segmented rail of DC electrodes. Such DC electrodes for transporting (first) ions along the first linear trapping zone 315, and/or (ii) second ions along the second linear trapping zone 330 are indicated in Fig. 3 and 4 by the un-patterned (empty) rectangles below the dashed lines. The thick dashed lines in Fig. 3 indicate the approximate position of the projection of the first linear trapping zone 315 and the second linear trapping zone 330 onto the trap surface. However, in general, DC electrodes for transporting ions do not have to be arranged below the RF nulls along which they are to transport trapped ions.

### Interaction Region & Quantum Operations

The elementary building block of the ion trapping system according to the present disclosure allows to perform quantum operation(s) involving ions trapped (while performing said quantum operation(s)) in different linear trapping zones. In the present disclosure, such quantum operations (or ion manipulations) are also referred to as "*inter-zone*" operations.

Here, it is to be noted that the term **"*quantum operation*"** refers to e.g. the implementation of a quantum gate on qubits represented by the respective ions and/or an operation that entangles the states of the respective ions (and, in particular, operations entangling internal states of said ions). Quantum operations are usually implemented by irradiating the involved ions simultaneously with appropriate laser beams. In particular, inter-zone operations may be implementations of geometric phase gates, such as the Mølmer-Sørensen gate (MS-gate) and the Light-Shift Gate (LS-gate), which both utilize state-dependent forces induced by laser beams on the addressed ions to implement the respective quantum operations. Alternatively, one may use microwave radiation instead of laser beams to generate said quantum gate operations.

In case of a surface trap architecture, optical access for laser beams may e.g. be provided through the trap surface. Accordingly, in general, with respect to any elementary building block:

- in the interaction region, below the first linear trapping zone (e.g. orthogonal projection onto the trap surface), there may be a slit through the substrate of the trap surface that allows optical access of ions trapped in the first linear trapping zone in the interaction region;
- in the interaction region, below the second linear trapping zone, there may be a slit through the substrate of the trap surface that allows optical access of ions trapped in the second linear trapping zone in the interaction region;
- in the first non-interaction region, below the first linear trapping zone, there may be a slit through the substrate of the trap surface that allows optical access of ions trapped in the first linear trapping zone in the first non-interaction region; and/or
- in the second non-interaction region, below the second linear trapping zone, there is a slit through the substrate of the trap surface that allows optical access of ions trapped in the second linear trapping zone in the second non-interaction region.

More specifically, "*inter-zone*" quantum operation(s) are operations involving (i) one or more ion(s) trapped in the first linear trapping zone and (ii) one or more ion(s) trapped in the second linear trapping zone (different than the first linear trapping zone). In other words, "*inter-zone*" quantum operation(s) involve (i) one or more ion(s) trapped in a first RF null segment and (ii) one or more ion(s) trapped in a second RF null segment, wherein the first and the second RF null segments are different RF null segments that run besides each other. Here, it is to be noted that the first and the second RF null segments may be different parts or portions of one single linear trapping zone (e.g. as illustrated in Fig. 8). In other words, inter-zone operations are operations that are performed across the potential barrier of the double-well potential generated by the AC electrodes in the interaction region.

In the present disclosure, the region of the elementary building block, in which such inter-zone quantum operation can be performed, is referred to as **"*interaction region*".** In other words, the interaction region (i.e. the RF nulls in the interaction region), is suitable for performing inter-zone quantum operations. In Fig. 4, the interaction region of the elementary building block is indicated by the ellipse, marked as interaction region 430.

In contrast to the QCCD architecture shown in Fig. 1, ions do not have to be transported into the same linear trapping zone to perform quantum operations between them. As explained below, the two linear trapping zones may be segments (or section, or part) of a same linear trapping zone (e.g. the first and the second linear trapping zone may be part of one closed loop as illustrated in Fig. 8). However, even in this case, the elementary building block allows to perform quantum operations involving ions that are locally in different trapping zones (i.e. involving ions that are on RF null segments that run besides each other).

Since the two linear trapping zones run besides each other in the interaction-region, the inter-zone operations can be implemented as in the case of the periodic array architecture shown in Fig. 2. In particular, inter-zone operations may be performed using a dipole-dipole-like Coulomb interaction between ions in different linear trapping zones. In particular, this dipole-dipole-like Coulomb interaction can be used to couple the motional modes of the ions in the first and second linear trapping zones (positioned in the interaction region), by tuning the motional mode frequencies of the ions in the first and second linear trapping zone into resonance. This tuning of motional frequencies may be achieved using suitable voltage adjustments on the DC segments of the DC rails. The coupled motional modes can then be used to mediate the inter-zone quantum gates, in particular creating entanglement between ions in the first and second linear trapping zone. While in principle any motional mode may be used to mediate the inter-zone gates, it may be beneficial to employ the axial modes (z-direction in Figs. 4 and 5) for that purpose as these modes may experience the strongest coupling strength. However, one may also use one of the radial modes (which are aligned in the xy-plane in Figs. 4 and 5).

More specifically, at each position of an RF-null, there is one axial direction, which is at the respective position in the direction along the RF null. For instance, in the interaction region 430 of Fig. 4, the axial direction is the z-direction; in the single-well region 410 of Fig. 4, the axial direction is the z'-direction; and in the single-well region 450 of Fig. 4, the axial direction is the z"-direction.

Furthermore, at each position of an RF-null, there are two radial directions, which are both orthogonal to the axial direction and orthogonal with respect to each other. For instance, in Fig. 4, the radial modes will be oriented in the xy-plane in the interaction region 430, while they will be oriented in the x'y-plane in the first single-well region 410 and in the x"y-plane in the second single-well region 450.

On the other hand, operations that are not inter-zone operations are referred to as **"intra-zone"** operations. Accordingly, intra-zone quantum operations involve only ions trapped in the same linear trapping zone (and do not involve ions from two (or more) trapping zones running besides each other). In other words, all involved ions are in the same RF null segment. For instance, an operation that (i) involves only ions trapped in the first linear trapping zone, or (ii) involves only ions trapped in the second linear trapping zone is an intra-zone operation. Such entangling operations of ion-qubit sub-registers along the axial direction z may involve ions trapped in the same potential well or may involve ions trapped in two separate wells of a double-well potential within the same RF null segment, which may now be created by DC voltages on the DC electrodes. In the latter case, the entangling intra-zone operations may be implemented in analogous manner as entangling inter-zone operations by using a dipole-dipole Coulomb interaction across the barrier of said double-well potential.

As already mentioned above, so that quantum operations can be performed, the two linear trapping zones run besides each other in the interaction region. Accordingly, in the interaction region, as illustrated in Figs. 3 and 4, any two electrode rails of the first outer AC electrode rail 310, the first inner AC electrode rail 320, the second inner AC electrode rail 325, and the second outer AC electrode rails 335 may run besides each other. Merely since the distance between the two trapping zones is defined by a line perpendicular to the trap axes, i.e. a line within the radial plane, the present disclosure refers to the interaction region also as *"radial interaction region"* or *"radial interaction zone"*.

In general, "*besides each other*" e.g. means that the distance between two entities that run besides each other does not substantially change. In particular, in the interaction region, the two RF nulls are typically approximately parallel. For instance, as further explained below, in the interaction region, the deviation of the two RF nulls from perfectly parallel lines may be less than 1% (i.e. the deviation may be less than 1 $\mu$m over a length of 100 $\mu$m).

It is to be noted that the present disclosure is not limited to perfectly parallel lines or nearly parallel lines. It may be sufficient that the distance between the RF nulls in the interaction region is small enough for inter-zone operations to be performed between ions trapped in different RF nulls. Thus, in general, in the interaction region, the two RF nulls should run (sufficiently) close besides each other so that the electric Coulomb interaction between ions in the different RF nulls is sufficient for inter-zone operations. Typically, this entails that the effective pseudo potential generated by the AC electrodes in the interaction region is well described as a double-potential well. The interaction region is therefore also referred to as double-well region.

While different electrode rails typically also run besides each other, it is to be noted that the contour of the electrodes typically does not correspond to straight lines (this however is also not excluded) and the width of electrode rails may change also in the interaction region. In case of the electrode rails, the phrase "*besides each other*" is thus to be understood more broadly in the sense that the two electrode rails running besides each other are aligned with respect to each other and/or oriented in the same direction (which is typically at least roughly the axial trap direction).

Whether the interaction is sufficient for inter-zone operations may be inferred from the achievable gate time for inter-zone quantum gates, which should at least be within the coherence time of the ion-qubit and/or the motional coherence time. For a useful quantum processor, the achievable gate time should typically be several orders of magnitude shorter than the coherence time of the ion-qubit and/or the motional coherence time. Quantitatively, the electric Coulomb interaction between ions in the different RF nulls may be approximately described as a dipole-dipole coupling of the ions secular motion. For a specific motional mode and treating each ion string as a point dipole, the interaction potential is given by[2]

$$U = \frac{1}{4\pi\varepsilon_0} \frac{\boldsymbol{d}_1 \boldsymbol{d}_2 - 3(\boldsymbol{d}_1 \hat{\boldsymbol{s}})(\boldsymbol{d}_2 \hat{\boldsymbol{s}})}{s^3}, \quad (1)$$

where $\boldsymbol{d}_1$, $\boldsymbol{d}_2$ are the dipole moment vectors of the ions in the first and second linear trapping zone, respectively, $\hat{\boldsymbol{s}}$ is the unit difference vector of the dipoles' position, $s$ the dipole-dipole distance, and $\varepsilon_0$ the vacuum permittivity. From equation (1) it can be seen that the motional coupling strength scales with the inverse of the third power of the dipole-dipole distance $s$. For instance, two $^{40}$Ca$^+$ ions, one in each linear trapping site, with parallel motional modes oriented perpendicular to $\hat{\boldsymbol{s}}$ (i.e. $\boldsymbol{d}_1 \parallel \boldsymbol{d}_2 \perp \hat{\boldsymbol{s}}$) and oscillating with a frequency of 1 MHz, and with the ions located at an RF null distance of $s$ = 500 $\mu$m, will experience a motional coupling rate of about 1.4 Hz, according to equation (1). At a distance $s$ = 40 $\mu$m, for otherwise identical parameters, the motional coupling rate will be about 2.7 kHz. For a single $^{40}$Ca$^+$ ion per ion string, *sufficiently close* RF nulls may thus mean a distance $s$ not larger than 100 $\mu$m, preferably below below 50 $\mu$m. However, it is noted that the coupling, equation (1) can also be increased by increasing the charge of the ion string, for instance by increasing the number of ions in each ion string or using individual ions with a larger charge, or a combination thereof, such that a larger RF null distance *s* may be permissible. It is further noted that equation (1) is only valid for point dipoles and will only give an approximation for the coupling between ion strings with more than 1 ion per RF null.

In the interaction region, it may further be beneficial that the two RF nulls are parallel (and/or correspond to straight lines), or may be at least approximately parallel (and/or correspond approximately to straight lines), i.e. parallel within the limits imposed by the fabrication tolerances/imperfections of the device. Parallel or approximately parallel RF nulls have the advantage that the AC electric fields have only a negligible field component along the axial direction and that the axial motional modes of the ions in the first and second linear trapping zone are approximately aligned. For instance, a suitable length over which the two RF nulls should be approximately parallel would be at least 50 $\mu$m, i.e. the typical spatial extent of a moderately-sized ion string comprising 10 ions, or even a few multiples of this spatial extent to ensure negligible axial AC electric fields. For a typical microfabricated surface trap, the two RF nulls may show a deviation from two parallel lines of below 1 $\mu$m over a length of 100 $\mu$m due to fabrication tolerances/imperfections (corresponding to less than 1% deviation from perfectly parallel lines).

In the interaction region, it may further be beneficial that the RF nulls are parallel over at least the spatial extent along the trap axis of the two ion strings in the two trapping zones, such that the distance between the RF nulls does not vary by more than the limits imposed by the fabrication tolerance/imperfections, in order to guarantee the maximal possible coupling between the ion strings. In particular, it is clear that if the RF nulls start to curve away from each other, i.e. their separation in the radial plane increases within the extent of the ion string by more than the limits imposed by the fabrication tolerance/imperfections, then the overall coupling between the ion crystals will be reduced. It is further noted that for long ion strings, in particular if the length of one string becomes comparable or exceeds the RF null distance s, it may be beneficial to shift the two ion strings along the trap axis against each other by approximately one string length to achieve maximal coupling, e.g. when using the axial modes. In that case the extent of the ions strings is the combined length of both strings.

However, the present disclosure is not limited to parallel or approximately parallel RF nulls (and/or straight lines) in the interaction region. Coupling between ion strings may also be used to realize inter-zone gates in the case that the two RF follow curved trajectories. For instance, the two RF nulls may follow arc segments with opposite curvature such that, in the interaction region, there are two points (one point on each RF null) of minimal distance between the RF nulls, where the arc segments come closest (i.e. the distance between said two points is smaller than the distance between other point pairs, consisting of one point on the first linear trapping zone in the interaction region and one point on the second linear trapping zone in the interaction region). Even in such a case, coupling between the ion strings may still be used, although the coupling strength may be reduced compared to the case with parallel or approximately parallel RF nulls.

It is also noted that the values of RF null distance given above are only examples and depend on the specific ion species, number of ions per string, but also permissible inter-zone gate time, which is given by the overall quantum processor specifications such as qubit coherence time, average intra-zone gate time, etc. and the overall execution time required for a given quantum algorithm.

Furthermore, regarding the geometry of the trap electrodes and of the trapping potential, it is also noted that the present disclosure is not limited to such a symmetric setting as illustrated in Fig. 3 and 4. For instance, the diameter (in the radial direction) of the first outer electrode rail and the diameter (in the radial direction) of the second outer electrode rail may in general be different.

An exemplary electric field configuration for the AC electric field in the interaction zone is shown in Fig. 5. More specifically, Fig. 5 is a view of the xy-plane in the -z-direction showing an exemplary AC electric field configuration at the dashed line labelled "*section S2*" in the interaction region of Fig. 4. In Fig. 5, the RF-nulls extend in the axial z-direction and thus correspond to the black dots, which indicate the local minima 515 and 530 of the pseudo-potential in the xy-plane to which first and second ions are radially confined, respectively.

It is noted that, in the interaction region, as illustrated in particular in Figs. 3 to 5, the distance between the first and the second inner electrodes rails may even become zero (i.e. the two electrode rails may be merged). However, the present disclosure is note limited thereto as in general there may still be a (small) separation between the inner electrode rails.

It is noted that, in contrast to the QCCD architecture (cf. Fig. 1), the RF nulls do not have to be merged using an RF junction. In other words, due to the close proximity of the adjacent RF nulls in the radial interaction zone 405, ion-qubit sub-registers can be coupled utilizing e.g. a dipole-dipole Coulomb interaction. This obviates the need for junctions where RF nulls are merged (in particular, where the RF null topology is not one-dimensional). Accordingly, any RF null described herein may be a line with a one-dimensional topology, i.e. without junctions (in particular the AC electrodes may, however, have a furcation). In other words, according to the present disclosure, electrodes (in particular "inner" AC electrodes) may split and merge, whereas RF nulls typically do not split or merge.

Furthermore, with respect to the architecture of Fig. 2, the usage of curved RF nulls also obviates the need for ion shuttling by means of RF voltage control to realize the required motional coupling strength (by bringing RF nulls closer to each other when performing inter-zone operations). More specifically, the architecture of the present disclosure is not subject to the geometric constraint $d \lesssim s_t$ between the ion-surface separation $d$ and the distance between adjacent linear trapping zones $s_t$ (cf. e.g. [1]), by which periodic architectures that have many parallel RF nulls, as shown in Fig. 2, are constrained when RF voltage control is not utilized. The usage of curved RF nulls as disclosed herein is thus an alternative way to overcome the geometric constraint $d \lesssim s_t$, but without the technological overhead to control differential RF voltages on individual AC electrodes.

This allows to have the two RF nulls corresponding to the two linear trapping zones besides each other (e.g. parallel, or approximately/substantially parallel) while having a large distance $d$ between surface and ions (or between RF nulls and surface). More specifically, due to the above-mentioned geometric constraint, the distance $d$ between surface and ions becomes small when multiple (in particular, more than two) RF nulls are running besides each other. Accordingly, since a rather large distance $d$ may be obtained when there are only two RF-nulls running besides each other, there may be no other RF null other than the first and the second RF null in the interaction region and/or in the vicinity of the interaction region. More precisely, if the two RF nulls (i.e. the "first" and the "second" RF null) are at a distance s from each other in the interaction region, then:

(i) the distance of any other RF null to the first RF null is at least a factor 3, preferably a factor 3 to 5 (or even 5 to 10) larger than $s$; and
(ii) the distance of any other RF null to the second RF null is at least a factor 3, preferably a factor 3 to 5 (or even 5 to 10) larger than s.

In this way, the elementary building block according to the present disclosure allows to have an inter-zone interaction regions in which the different RF nulls are close to each other and the distance $d$ of the RF nulls to the trap surface is large (e.g. in comparison to ion-trap distances usually achieved with periodic architectures). For instance, in the above described $^{40}Ca^+$ ion example with the two $^{40}Ca^+$ ions, one in each linear trapping site, with parallel motional modes oriented perpendicular to $\hat{s}$ (i.e. $d_1 \parallel d_2 \perp \hat{s}$) and oscillating with a frequency of 1 MHz:

• the distance between the two RF nulls may be less than 100 $\mu m$; preferably 30 to 50 $\mu m$, or even less than 30 $\mu m$, and
• the distance $d$ between the RF nulls to the trap surface may be more than 50 $\mu m$; preferably 60 to 100 $\mu m$, or even more than 100 $\mu m$.

It is noted that this principle is not limited to ion surface traps, as the same principle allows to have 2 RF nulls generated by two linear 3D traps to be close besides each other in the interaction region without the need to reduce the distance between the RF Nulls to the AC electrodes (also in case of a surface trap, the distance d of the RF null to the surface is mostly relevant only because the electrodes are placed on the surface).

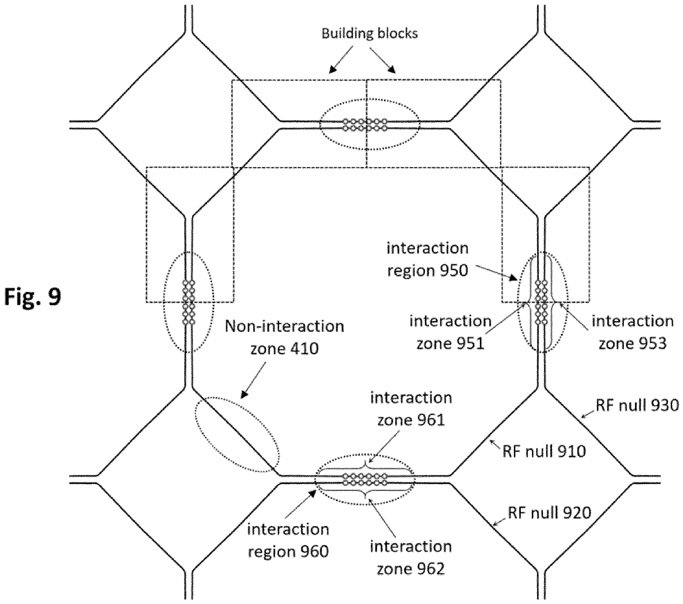

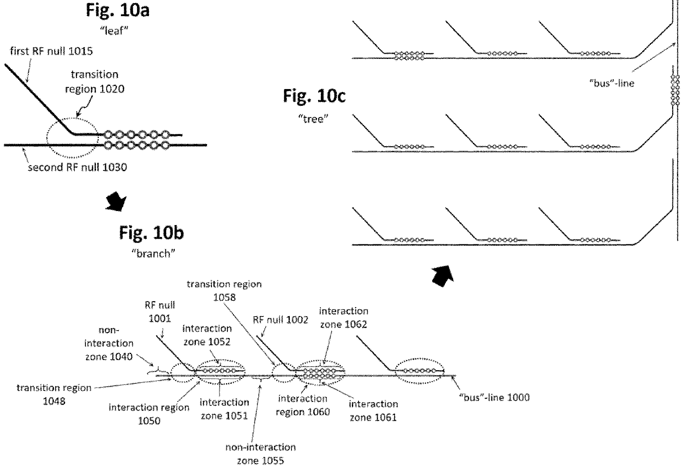

Furthermore, since the RF nulls are curved away from each other in the transition region, the elementary building block according to the present disclosure allows to shuttle ions within one linear trapping zone into different interaction regions. In each interaction region, said one linear trapping zone may run besides a respective different linear zone, as further explained in the section "*Upscaling Topologies*" (cf. also Figs. 9, 10b and 10c). Thus, ions within one linear trapping zone can have inter-zone interactions with ions trapped in a plurality of different trapping zones (e.g. in Fig. 9, ions in one linear trapping zones can, by shuttling them around, have inter-zone interaction with ions trapped in four mutually different linear trapping zones). By contrast the architecture in Fig. 2 only allows inter-zone interaction with ions trapped in the respective two adjacent trapping zones (and has the already-mentioned geometric constraints). This allows one to efficiently scale-up the number of ions/qubits and to exchange quantum information across the TIQIP.

*Transition Region*

As explained above, the elementary building block includes an interaction region in which (i) the first and second RF null run besides each other, (ii) the first and the second AC electrode rails, and/or (iii) DC electrode rails run besides each other. However, after leaving the interaction region, the RF nulls and/or electrodes stop running besides each other as they are (i) curved away from each other and/or diverge from each other. In the present disclosure, this region of the elementary building block, in which the first and the second RF null are curved away from each other, is referred to as "*transition region*". Such linear surface traps with a curved RF null may be realized using standard micro-manufacturing processes such as e.g. complementary metal-oxide-semiconductor (CMOS) processes and micro-electro-mechanical systems (MEMS) processes.

It is to be noted that "*curved away*" does not necessarily refer to a round curve of the RF nulls and/or electrode rails. For instance, as also illustrated in Figs. 3 and 4, the electrodes may have a (sharp) corner/edge, at which the respective electrode rail is angled. In particular, in the transition region after being curved away from each other, the angle between the first and the second RF null may be significantly larger than zero. For instance, as illustrated in Fig. 3 and 4, said angle may be approximately 90°. However, the present disclosure is not limited to any particular angle. Furthermore, the electrode rails in the transition region, in particular the AC rails, may even have a completely irregular (or non-trivial) contour, e.g. a piece-wise linear contour with multiple sharp corners or a curved contour with varying (concave and/or convex) curvature, or a combination thereof, in order to optimize the electric confining potential in the transition region and/or the interaction region and/or the non-interaction region. In particular, the contour of the electrode rails does not necessarily correspond to two straight lines (as in Figs. 3 and 4), and the width of any electrode rail may change along said electrode rail. Such a contour may be generated by (computer-) optimization of the electrode contours to optimize specific target parameters, e.g. the uniformity of the AC confinement strength across the entire linear trapping zone. For instance, the taper 490 (resulting in the slight increase of the breadth of the inner electrode rail already before the furcation 380) of the merged region of AC Electrode rails 320 and 325 in Fig. 4 is a very simple example of an optimized contour with multiple corners.

Furthermore, as illustrated in **Fig. 10a,** which shows another exemplary building block, only the first or only the second RF null (same for the electrodes) may be curved in the transition region. More specifically, in Fig. 10a, only the first RF null 1015 is curved in the transition regions; and the second RF null 1015 is (remains) a straight line in the transition region.

In general, in the transition region, the first and the second linear trapping zone lead away from one (i.e. a same) end of the interaction region in such a way that a distance between the first and the second linear trapping zone increases away from said one end of the interaction region. More specifically, the distance to the second RF null increases along the first RF null away the interaction region, and the distance to the first RF null increases along the second RF null away from the interaction region. In particular, the distance to a (e.g. one, any, or each) second electrode rail may increase along each of the first electrode rails away from the interaction region; and/or the distance to a (e.g. one, any, or each) first electrode rail may increase along each of the second electrode rails away from the interaction region.

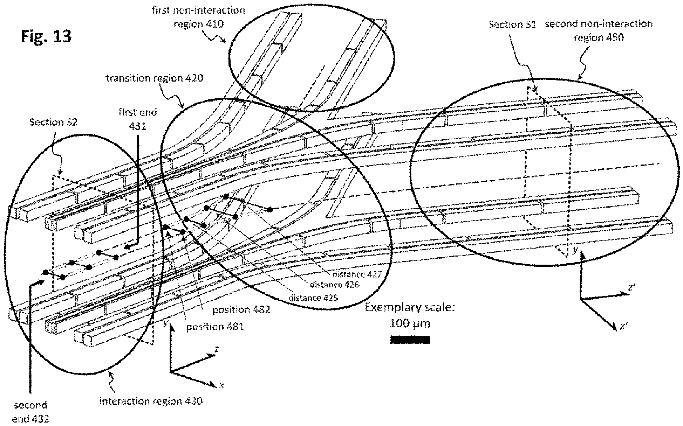

For the distance to the second RF null this is illustrated in Fig. 4. More specifically, a movement (e.g. of a shuttled ion) along the first RF null away from the interaction region 430 is indicated by the dashed arrows. The black dots are positions on the first or second RF null. In particular, there are three positions on the first RF null labelled as position 475, position 476 and position 477. Following the RF null trajectory, the position 477 is farther away from the interaction region 430 than the position 476, and the position 476 is farther away from the interaction region 430 than the position 475. As can further be seen: the distance 425 to the second RF null at the position 475 is smaller than the distance 426 to the second RF null at the position 476; and the distance 426 to the second RF null at the position 476 is smaller than the distance 427 to the second RF null at the position 477. Here the phrase "*distance at*" refers to the distance between the respective position/point on the first RF null and the second RF null. To be specific, the distance 427 between the point 477 and the second RF null 330 is the distance between the point 477 and that point on the second RF null ("that" point because typically there is just one such point) that is the closest to the point 477 among all points the second RF null. In other words, when moving along the first RF null away from the interaction region, the distance to the nearest point among points on the second RF null increases (as in the interaction region 430 in Fig 4 and the transition region 420 in Fig. 13, said nearest point may in general change when moving along the first RF null). Similarly, when moving along the second RF null away from the interaction region, the distance to the nearest point among points on the first RF null increases (as in the interaction region 430 in Fig 4 and the transition region 420 in Fig. 13, said nearest point may in general change when moving along the second RF null).

Accordingly, the distance of a first ion to (i) second ion(s), (ii) the second RF null, and/or (iii) second electrodes can be increased by moving said ion, in the transition region along the first RF null, away from the interaction region. Similarly, the distance of a second ion to (i) first ion(s), (ii) the first RF null, and/or (iii) first electrodes can be increased by moving said ion, in the transition region along the second RF null, away from the interaction region.

As also illustrated in Fig. 4, in the interaction region, the distance to the second linear trapping zone does not change (much/significantly) along the first linear trapping zone. As mentioned above in certain linear trap design, there may be small changes of the distance between the RF nulls in the interaction region. However, such small deviations are qualitatively different from the increase of the distance in the transition region of the elementary block according to the present disclosure. That is to say, the distance between the RF nulls increases (significantly) in the transition region. For instance, in the transition region, the distance along one RF null to the respective other RF null may become more than three-times, more than four-times, or even more than five-times as much as the distance between the two RF nulls in the interaction region. Accordingly, in the transition region, the distance between the RF nulls becomes typically at least more than about $100\mu m$; typically, more than about $150\mu m$; and preferable even more than $200\mu m$.

As also illustrated in Fig. 4, the first and the second RF null leave the interaction region 430 at the same end 431 besides each other. The first and the second RF null then (when moving away from the interaction zone) enter, besides each other, the transition region 420. It is noted that the interaction region 430 and the transition region 420 may be adjacent regions, i.e. the RF nulls may be entering the transition regions at the same time/position where they leave the interaction region. Furthermore:

-   the distance along the first RF null to the second RF null increases (e.g. with increasing distance from the one end 431 of the interaction zone when moving) away from the end 431, and

- the distance along the second RF null to the first RF null increases (e.g. with increasing distance from the one end 431 of the interaction zone when moving) away from the same end 431.

In particular, the distance along the first RF null to the second RF null may increase overall when moving away from the end 431; and/or the distance along the second RF null to the first RF null may increase overall when moving away from the end 431. By "*overall*" it is meant that, depending on the exact shape of the electrodes in the transition region, said distances may also slightly decrease in spatially limited parts of the transition region, but will overall increase again to a distance larger than the distance in the interaction region when moving further away from one end 431 of the interaction region and towards the single-well regions. In any case, said distances will never become zero, i.e. the two RF nulls are never merged to a single RF null.

In other words, the distances along the RF nulls to the respective other RF null is increased by curving the RF nulls away from each other; and not e.g. by having one RF null (e.g. the first) leave the interaction region only at the first end 431 and the respective other RF null (e.g. the second) leave the interaction region only at the second end 432.

That is to say: both RF nulls enter, when leaving the interaction region (the schematic indications of the regions in Fig. 4 does not reflect this adjacency of the regions), the transition region besides each other. More specifically, the first RF null enters, besides the second RF null, the transition region at the point 481; and the second RF null enters, besides the first RF null, the transition region at the point 482.

Furthermore:

- the distance to the second RF null increases when moving: (i) along the first RF null, (ii) from said point 481, and (iii) away from the interaction region; and
- the distance to the first RF null increases when moving: (i) along the second RF null, (ii) from said point 482, and (iii) away from the interaction region.

Alternatively or in addition:

- the distance to a second RF electrode rail (inner AC, outer AC, and/or DC) may increase when moving: (i) along a first electrode (inner AC, outer AC, and/or DC), (ii) from a point at which said first RF electrode rail enters the transition region, and (iii) away from the interaction region; and
- the distance to a first RF electrode rail (inner AC, outer AC, and/or DC) may increase when moving: (i) along a second electrode (inner AC, outer AC, and/or DC), (ii) from a point at which second RF electrode rail enters the transition region, and (iii) away from the interaction region.

Regarding the electrode geometry, as mentioned above, the inner electrode rails may be merged to one inner electrode rail in the interaction region. Said one merged inner electrode rail may then extend, as one merged inner AC electrode rail, from the interaction region into the transition region. In this case, as exemplarily shown in Fig. 3 and 4, the first 320 and the second 325 inner AC electrode rail may separate from each other in the transition region.

In other words, in the transition region, the inner electrode rails may form a furcation 380. In particular, at such an AC electrode furcation 380, the one (merged) inner AC electrode rail splits into two AC electrode rails (one of these two AC electrode rails is part of the first electrode rail, and the other of these two AC electrode rails is part of the second electrode rail, as also illustrated in Figs. 3 and 4). When moving away from said furcation 380 in the direction away from the one end of the interaction region, the distance between these two split electrode rails increases as already explained above.

It is noted that, before the split (in particular in the interaction region), the one merged electrode rail corresponds to both the first and the second inner AC electrode rail. Thus, on the side of the furcation closer to the interaction region, the first and the second inner AC electrode rail are the same electrode rail, and the distance between them is accordingly zero.

### Non-interaction Region

As also illustrated in Fig. 4, the elementary building block may also include a first non-interaction region 410 and/or a second non-interaction region 450. More specifically, the first RF null may lead from the interaction region, through the transition region into a first non-interaction region; and/or the second RF null may lead from the interaction region, through the transition region into a second non-interaction region. It is noted that the first and the second non-interaction region are mutually different regions that are spatially separated from each other (e.g. at least 100 $\mu m$).

In particular, in a non-interaction region, there may be no other RF null in the vicinity of the respective RF null. For instance, if the two RF nulls (i.e. the "first" and the "second" RF null) are at a distance s from each other in the interaction region, then,

(i) in the first non-interaction region, the distance of the first RF null to any of any other RF null (other than the first RF null) to is at least a factor 3, preferably a factor 3 to 5 (or even 5 to 10) larger than *s*; and
(ii) in the second non-interaction region, the distance of the second RF null to any of any other RF null (other than the second RF null) is at least a factor 3, preferably a factor 3 to 5 (or even 5 to 10) larger than s.

In particular, in e.g. the first non-interaction region, the first RF null (and/or the first electrodes for generating the first RF null) may be sufficiently far away from the second RF null (and/or the second electrodes) so that the effective pseudo potential confining the first ions has the form of a single-well potential in the x'-direction. The non-interaction regions are thus also referred to as "*single-well regions*".

Such an exemplary confining potential, having the form of a single-well potential is shown in **Fig. 6.** More specifically, Fig. 6 is a view of the yx'-plane in the -z'-direction (i.e. away from the transition region) showing an exemplary AC electric field line configuration at the dashed line labelled "*section S1*" in the interaction region of Fig. 4. In Fig. 6, the first RF-null extend in the axial z'-direction and thus correspond to the black dot, which indicate the local minimum 615 of the pseudo-potential in the yx'-plane to which first ions are radially confined.

It is further noted that the term "*non-interaction*" merely serves to distinguish the difference to the interaction regions in which inter-zone operations/interactions can be performed. In particular, in the non-interaction regions, there is still interaction between ions trapped in the same trapping zone. Accordingly, intra-zone operations may be performed in the non-interaction regions.

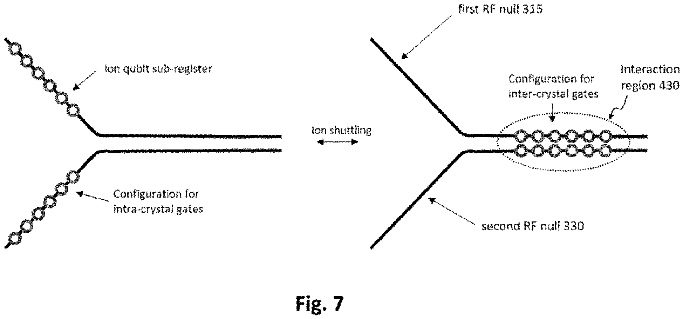

This is illustrated in **Fig. 7,** which schematically shows only the first and second RF null of the elementary building block of Figs. 3 and 4 (or Figs. 12 and 13). In particular, as shown on the right-hand side of Fig. 7, first and second ions may be moved in the interaction region to perform inter-zone operations (in Fig. 7, referred to as inter-crystal gates). Furthermore, the first and/or the second ions may be moved away from each other into their respective non-interaction zone (and thus away from the electrodes of the respective other trapping zone) to perform (without disturbance from the other ions and/or trapping zone) intra-zone operations (in Fig. 7, referred to as intra-crystal gates). However, it is noted that intra-zone operations may not exclusively be performed in the non-interaction region but may also be performed in the interaction region.

## Upscaling Topologies

In general, a scalable architecture can be achieved by stitching together multiple of the elementary building blocks. In this way, as further explained below, multiple of these elementary building blocks can be combined to scale up the number of ions that can be trapped and manipulated within the ion trapping system. Regarding this it is noted that the ion trapping system may include other building blocks than the elementary building blocks described herein (or the elementary building blocks may in some way be extended) and that other upscaling architectures than the ones exemplarily described herein may be used.

## Closed-loop Topology with all-to all Connectivity

A topology, in which the first and second linear trapping zone of the elementary building block form a closed loop is illustrated in **Fig. 8,** which is further described below. First it is to be noted that, in Fig. 8 (as well as in Fig. 7, Fig. 9, 10a, 10b and 10c), the solid lines indicate RF nulls generated by AC electrodes (e.g. by appropriately arranged pairs of electrode rails). It is further to be noted that the RF nulls may not only be generated by electrode rails of a surface trap but also by the AC electrodes of any other ion trap that generates linear trapping zones. For instance, the RF nulls may be generated by AC electrodes of a 3D ion trap (then each RF null may e.g. be generated by 4 electrode rails as discussed below with reference to Figs. 12 to 15). Accordingly, the upscaling architectures disclosed herein are not limited to any particular type of ion trap that generates linear trapping zones.

In this topology illustrated in Fig. 8, there is a transition region 820 other than the transition region 420 in which the first linear trapping zone 315 and the second linear trapping zone 330 lead away from the other ("second") end 432 (other than the "first" end 431) of the interaction region 430. In particular, in transition region 820, the distance between the first and the second linear trapping zone increases away from the other end 432 of the interaction region 430. Since the transition region 820 is similar to the transition region 420, further details and description of the transition region 820 will be omitted.

The elementary building block of Fig. 8 further includes:

- a third RF null 850 that connects a first end 811 of the first RF null with a first end 821 of the second RF null and
- a fourth RF null 860 that connects a second end 812 of the first RF null with a second end 822 of the second RF null.

In other words, the first and the third RF null connect with each other at the end 811, the second and the third RF null join each other at the end 821, the first and the fourth RF null join with each other at the end 812, and the second and the fourth RF null join each other at the end 822. In other words, the first, the third, the second, and the fourth linear trapping zone form, in this order, a single linear trapping zone that has the form of a closed loop.

It is noted that the "*ends*" of the RF nulls are not actual end of the respective linear trapping zone (and there doesn't have to be an angle between RF nulls connecting at and end). There is one closed RF null loop, in which the RF null remains a one-dimensional line. This one RF null loop is here only conceptually divided into four RF nulls (or RF null segments) in order to describe Fig. 8.

The elementary block shown in Fig. 8 has the particular advantage that it allows an "*all-to-all*" connectivity between ions trapped in the loop. More specifically, even ions that are far away from each other along the RF null (e.g. ions 801 and 802) can be brought close to each other, and quantum information can be exchanged between them via (radial) inter-zone interaction. This may facilitate implementing certain quantum operations. Like the elementary blocks shown in Fig. 3, 4 and 10a, the elementary block shown in Fig. 8 can be scaled up.

### *Closed-loop Topology* - *Nearest Neighbour Connectivity*

An exemplarily upscaling (2D) topology, in which the AC electrodes are arranged for generating a plurality (possibly/typically more than two) of linear trapping zones is illustrated in **Fig. 9.**

As indicated by the dashed boxes, the topology of Fig. 9 can be obtained by stitching together (or joining or putting together) multiple building blocks that are of the form shown in Figs. 3 and 4 (here shown schematically as in Fig. 7). In particular, when forming a periodic pattern by further continuing/repeating the topology indicated in Fig. 9, a plurality of linear trapping zones that form mutually different closed loops are obtained.

In particular, the first and the second RF null of an elementary building block are part of different closed loops. Furthermore, each closed RF loop is stitched together/comprises from the RF nulls of a plurality of different building blocks (in the example shown in Fig. 9, eight building blocks contribute to each closed loop).

In particular, each of the RF loops may comprise:

> (i) an interaction zone(s) for performing inter-zone quantum operations between ions trapped in said linear trapping zone/RF loop and ions trapped in another (adjacent) RF loop; and
> (ii) a non-interaction zone that is farther away from other RF loops than the interaction zone(s) of said RF loop is away from the other RF loops.

For instance, the non-interaction zone 410 is farther away from the other RF loops than the interaction zone 951, since the non-interaction zone 410 is farther away from the RF null 920 (RF null 920 being the RF null that is closest to the non-interaction zone 410 among the other RF nulls) than the interaction zone 951 is away from the RF null 930 (RF null 930 being the RF null that is closest to the interaction zone 951 among the other RF nulls).

Here, it is to be noted that, in the present disclosure the term "*interaction*/*non-interaction zone*" refers to a part/segment of an RF null that is in an interaction/-non-interaction region. In other words, the (non-)interaction zone of an RF null is that part/segment of said RF null that is in the respective (non-)interaction region. For instance:

- the segment 961 of the RF null 910 is the interaction zone of the RF null 910 in the interaction region 960;
- the segment 962 of the RF null 920 is the interaction zone of the RF null 920 in the interaction region 960
- the segment 951 of the RF null 910 is the interaction zone of the RF null 910 in the interaction region 950; and
- the segment 953 of the RF null 930 is the interaction zone of the RF null 930 in the interaction region 950.

In particular, in case of a plurality of interaction zones, said plurality of interaction zones may allow inter-zone quantum operations with ions in a respective plurality of other RF nulls to be performed (each interaction zone may allow inter-zone quantum operations with exactly one other RF null);

### *Bus Architecture*

**Fig. 10b** illustrates an exemplarily upscaling (2D) topology using the elementary block shown in Fig. 10a, in which only one of two RF nulls is curved. However, the principle shown in Fig 10b (and 10c) may in an analogues manner be applied to other building block variants (in particular to the one shown in Fig. 7, corresponding to physical implementation shown in Figs. 3 and 4, or Figs. 12 and 13, or also to another upscaling block such as Fig. 8).

As shown in Fig 10b, the AC electrodes may be arranged for generating a plurality of mutually different RF nulls (in Fig. 10b, bus line 1000, RF null 1001, and RF null 1002). One of these RF nulls, referred to as "*bus line 1000*" in Fig. 10b, has a plurality of interaction zones, which are portions or segments of said RF null. In Fig 10b, two interaction zones/segments of the bus line 1000 are explicitly shown, namely interaction zone 1051 and interaction zone 1061.

Each of the interaction zones of the bus line is for performing inter-zone quantum operations between ions trapped in the bus line 1000 and ions trapped in one of the other RF nulls. For instance, the interactions zone 1051 is for performing inter-zone operations with ions in the RF null 1001 (more specifically with ions in the interaction zone 1052 of the RF null 1001); and the interactions zone 1061 is for performing inter-zone operations with ions in the RF null 1002 (more specifically with ions in the interaction zone 1062 of the RF null 1002).

Furthermore, for each of the interaction zones of the bus line, there is a corresponding transition region, as described above, in which the bus line and the respective other RF null (that runs besides the bus line in said interaction zone) are curved away from each other. For instance, for the interaction zone 1061 of the interaction region 1060, there is the transition region 1058 in which the bus line 1000 and the RF null 1002 are curved away from each other; and for the interaction zone 1051 of the interaction region 1050, there is the transition region 1048 in which the bus line 1000 and the RF null 1001 are curved away from each other.

Furthermore, the bus line 1000 may comprise a plurality of non-interaction zones (1040 and 1055 in Fig. 10b). As described above, non-interaction zones are RF null segments that are farther away from other RF nulls than interaction zone segments. Accordingly, each of the non-interaction zones of the bus line is farther away from other RF nulls (other than bus line) than each of the interaction zones of the bus line is away from said other RF nulls. For instance, the non-interaction zone 1040 is

(i) farther away from the RF nulls 1001 and 1002 than the interaction zone 1051 is away from the RF nulls 1001 and 1002 (since the interaction zone 1051 is close to the interaction zone 1052 of the RF null 1001); and
(ii) farther away from the RF nulls 1001 and 1002 than the interaction zone 1061 is away from the RF nulls 1001 and 1002 (since the interaction zone 1061 is close to the interaction zone 1062 of the RF null 1002).

Furthermore, each of the other RF nulls (other than the bus line 1000) comprises:

- (i) an interaction zone for performing quantum operations between ions trapped in said other linear trapping zone and ions trapped in the bus line. For instance, in Fig. 10b, the RF null 1001 comprises the interaction zone 1052 for performing inter-zone quantum operations with ions trapped on the bus line 1000 (when the bus-line ions are moved to the interaction zone 1051); and the RF null 1002 comprises the interaction zone 1062 for performing inter-zone quantum operations with ions trapped on the bus line 1000 (when the bus-line ions are moved to the interaction zone 1061).
- (ii) a non-interaction zone that is farther away from the bus line than the interaction zone of the said other RF null is away from the bus line.

**Fig. 10c** shows an exemplary topology for further scaling up the topology shown in Fig. 10b using the same principle as already used in Fig. 10b to scale up the Fig. 10a. In other words, each of a plurality of bus lines as described with reference Fig. 10b is connected to a same higher-layer bus line.

*Quantum Computing and method for entangling ions*

The present disclosure has many applications in particular in the field of quantum information processing and/or quantum computing. In particular, the ion trapping system according to the present disclosure may be used for entangling ions.

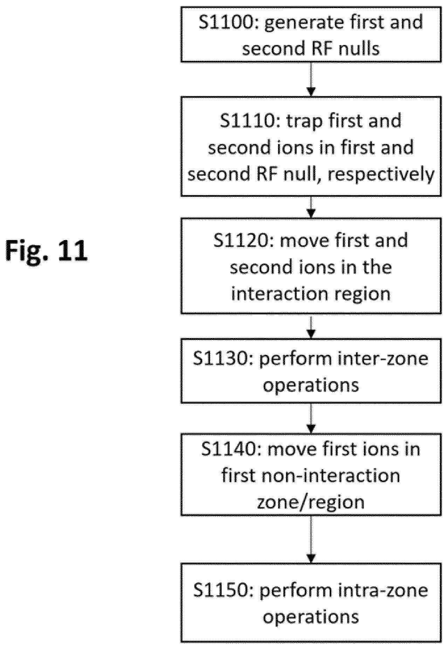

For instance, as illustrated in **Fig. 11,** such a method for entangling ions may comprise the steps of:

(i) generating (S1100), by applying AC voltages to the AC electrodes of the ion trapping system, the first and the second RF null (of an elementary building block);
(ii) trapping (S1110) the first and second ions in the first and second RF null, respectively;
(iii) moving (S1120) (a) the first ions, within the first linear trapping zone, into the interaction region, and (b) the second ions, within the second linear trapping zone, into the interaction region;
(vi) performing (S1130), while the first ions are in the first interaction zone and the second ions are in the second interaction zone, inter-zone quantum operations between the first and the second ions; and
(vii) moving (S1140) the first ions, within the first linear trapping zone, away from the first interaction zone through the transition region into a first non-interaction zone of the first linear trapping zone;
(viii) performing (S1150), while the first ions are in the first non-interaction zone/region, intra-zone quantum operations between the first ions; and/or
(ix) performing (S1150), while the second ions are in the second interaction zone/region, intra-zone quantum operations between the second ions.

As already mentioned above, while the first and/or the second ions are in the interaction region, intra-zone quantum operations between the first ions and/or intra-zone quantum operations between the second may also be performed. This approach has the advantage that the laser infrastructure provided for the implementation of the inter-zone quantum operations can be reused for intra-zone quantum operations.

It is noted that in step (ii), the first and/or the second ions may be trapped directly within the first and/or second interaction region, respectively. In this case, the respective moving step (iii) (S1120) of the first and/or second ions into the first and/or second interaction region may be omitted.

It is noted that, the controller 360 (e.g. circuitry 365) may be configured to perform such a method for entangling ions. In particular, in steps (i), the controller may apply appropriate AC voltages to the AC electrodes such that the first and the second RF null are generated (the AC voltages are also applied during the following steps (ii) to (ix)). In step (iii) and (vii), the controller may apply appropriate DC to transport/move the trapped ions. In steps (vi), (viii) and (ix), the controller may also be responsible for controlling laser(s) to generate appropriate laser beams for performing the respective quantum operations on the trapped ions.

It is finally noted that the present disclosure is not limited to applications in the specific field of quantum information processing/computing and relates to the more general field of entangling trapped ions, which has applications in other fields as well.

### Linear 3D trap Implementations

As already mentioned above, only for the sake of understanding and simplicity, the details of the present disclosure are mostly explained with reference to ion surface traps. However, in general, the present disclosure can also be implement using e.g. an architecture based on linear 3D ion traps rather than surface traps. The term "*linear 3D ion trap*" refers to any ion trap that (i) uses AC electrodes to generate a linear trapping zone (for trapping ions), and (ii) is not a surface trap (e.g. in particular not a trap with all electrodes arranged in/on the same plane).

A 3D trap thus differs from a surface trap in that the AC electrodes generating an RF null are not arranged on a surface, but are arranged three dimensions round said RF null. More specifically, for any/each two-dimensional plane that intersects the RF null, the AC electrodes generating said RF null are in both half-spaces, into which said plane divides the three-dimensional Euclidean space. In other words, it is not possible to divide the three-dimensional Euclidean space, using a plane that intersects the RF null, into two half-spaces such that all AC electrodes generating the RF null are in the same half-space. It is noted that the term "*half-space*" refers to either of the two parts into which a hyperplane divides a space into two parts.

Accordingly, in an architecture based on linear 3D ion traps, the AC electrodes of the elementary building block comprise:

- two or more first AC electrode rails that form a first linear 3D trap for generating the first linear trapping zone, and
- two or more second AC electrode rails that from a second linear 3D trap for generating the second linear trapping zone.

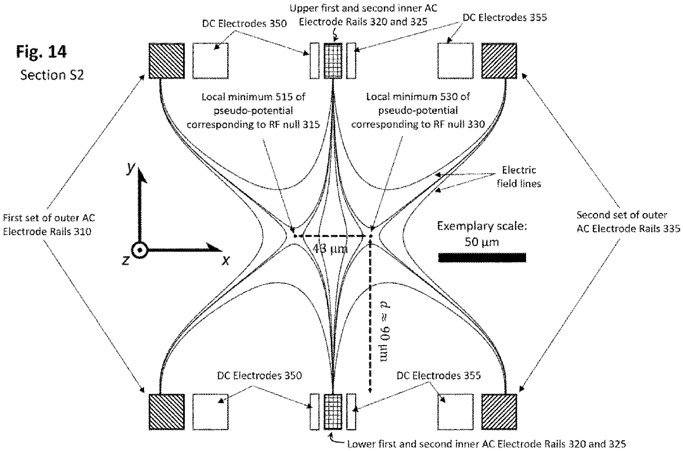

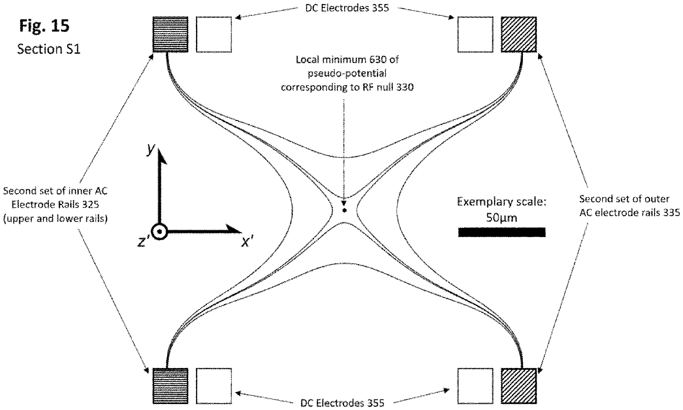

An exemplary elementary building block of a 3D ion trap architecture according to the present disclosure with four AC electrode rails (sometimes also referred to as "*rods*") for generating each linear trapping zone is illustrated in **Fig. 12.** Further conceptual details of the elementary building block of Fig. 12 are illustrated in **Fig. 13.** Furthermore, an exemplary RF trapping configuration (RF electric field) generated at the section S2 in Fig. 13 is illustrated in **Fig. 14;** and an exemplary RF trapping configuration (RF electric field) generated at the section S1 is illustrated in **Fig. 15.** A detailed description of most aspects of Figs 12 to 15 will be omitted, since they have already been described with reference to Fig. 3 to 6, respectively. The main difference is that in Figs 12 to 15 there is a pair/set of two electrode rails (one upper and one lower) for each electrode rail in Fig. 3 to 6. To be specific, in Figs 12 to 15, there are two first outer electrode rails 310, two first inner electrode rails 320, two second inner electrode rails 325, and two second outer electrode rails 335 rails (each time, one upper and one lower electrode rail).

Fig. 12 also shows an exemplary AC voltage configuration based on one oscillating voltage $U_{AC}$ (e.g., at the time $t$, the voltage $U_{AC}(t)$ may be given as $U_{AC}(t) = U_0 \cos(\omega t)$, where $U_0$ is typically between 100V to 400V, the frequency $\omega$ is typically between 20 to 50 MHz). More specifically,

- the same oscillating voltage $U_{AC}$ is applied to each of the upper outer AC electrode rails and the lower inner electrode rails (and/or the lower inner merged electrode rail as shown in Fig. 12); and
- the same oscillating voltage $-U_{AC}$ is applied to each of the lower outer electrode rails and the upper inner AC electrode rails (and/or the upper inner merged electrode rail as shown in Fig. 12).

It is noted that the present disclosure is not limited to a quadrupole implementation as shown in Fig. 12, but applies to any multipole implementation.

### Further Aspects

The embodiments and exemplary implementations mentioned above show some non-limiting examples. It is understood that various modifications, e.g. made to adapt the examples to new systems and scenarios, may be made without departing from the claimed subject-matter. Furthermore, any of the steps of the methods described herein may be included as code instructions in a program, which may be executed by one or more processors.

Summarizing the above, the embodiments of the present disclosure provide ion trapping systems with a scalable architecture and methods that use such an ion trapping system for entangling ions trapped in different linear trapping zones. For instance, an ion trapping system that comprises alternating current (AC) electrodes arranged for generating a first and a second mutually different linear trapping zone is provided. The AC electrodes are arranged to generate the first and the second linear trapping zone such that: (i) the first and the second linear trapping zone run besides each other in an interaction region for performing quantum operations between first ions trapped in the first linear trapping zone and second ions trapped in the second linear trapping zone; and (ii) in a transition region, in which the first and the second linear trapping zone lead away from one end of the interaction region, a distance between the first and the second linear trapping zone increases away from the one end of the interaction region.

According to a first aspect, an ion trapping system is provided. The ion trapping system comprises alternating current (AC) electrodes arranged for generating a first and a second mutually different linear trapping zone. In an interaction region for performing quantum operations between first ions trapped in the first linear trapping zone and second ions trapped in the second linear trapping zone, the first and the second linear trapping zone run besides each other. Furthermore, in a transition region in which the first and the second linear trapping zone lead away from one end of the interaction region, a distance between the first and the second linear trapping zone increases away from the one end of the interaction region.

According to a second aspect provided in addition to the first aspect, in another transition region in which the first and the second linear trapping zone lead away from another end of the interaction region, a distance between the first and the second linear trapping zone increases away from the other end of the interaction region, wherein the other end of the interaction region is an end other than the one end, and the other transition region is a region other than the transition region. Furthermore, the AC electrodes are arranged for generating a third linear trapping zone and a fourth linear trapping zone such that: the first, the third, the second, and the fourth linear trapping zone form, in this order, a single linear trapping zone that has the form of a closed loop.

According to a third aspect provided in addition to the first aspect, the AC electrodes are arranged for generating a plurality of linear trapping zones, wherein said linear trapping zones form mutually different closed loops, and the first and the second linear trapping zone are segments of different linear trapping zones of the plurality of linear trapping zones. Furthermore, each of the linear trapping zones comprises (i) an interaction zone in which the linear trapping zone runs besides another linear trapping zone of the plurality of linear trapping zones, the interaction zone being provided for performing quantum operations between ions trapped in said linear trapping zone and ions trapped in said other linear trapping zone; and (ii) a non-interaction zone that is farther away from other linear trapping zones than the interaction zone of the linear trapping zone is away from the other linear trapping zones.

According to a fourth aspect provided in addition to the first aspect, the AC electrodes are arranged for generating a plurality of mutually different third linear trapping zones, the third linear trapping zones including the second linear trapping zone and not including the first linear trapping zone. Furthermore, the first linear trapping zone comprises (i) for each of the third linear trapping zones, an interaction zone for performing quantum operations between ions trapped in said interaction zone and ions trapped in the third linear trapping zone; and (ii) a plurality of non-interaction zones that are farther away from the third linear trapping zones than each of the interaction zones of the first linear trapping zone is away from the third linear trapping zones. Furthermore, each of the third linear trapping zones comprises (i) an interaction zone for performing quantum operations between ions trapped in the third linear trapping zone and ions trapped in the first linear trapping zone; and (ii) a non-interaction zone that is farther away from each linear trapping zone other than the third linear trapping zone than the interaction zone of the third linear trapping zone is away from the first linear trapping zone. Furthermore, for each of the third linear trapping zones, there is a transition region in which a distance between the first linear trapping zone and the third linear trapping zone increases away from an end of the respective interaction region in which the first linear trapping zone and the third linear trapping zone run besides each other.

According to a fifth aspect provided in addition to any of the first to the fourth aspect, the AC electrodes are arranged on a trap surface; and the AC electrodes form: (i) a first linear surface trap for generating the first linear trapping zone, and (i) a second linear surface trap for generating the second linear trapping zone.

According to a sixth aspect provided in addition to the fifth aspect, in the transition region, the distance between the first and the second linear surface trap increases away from the one end of the interaction region.

According to a seventh aspect provided in addition to the fifth or sixth aspect, the AC electrodes comprise two first AC electrode rails forming the first linear surface trap; the AC electrodes comprise two second AC electrode rails forming the second linear surface trap; in the interaction region, the first and the second AC electrode rails run besides each other; and in the transition region, a distance between the first and the second AC electrode rails increases away from the one end of the interaction region.

According to an eighth aspect provided in addition to the seventh aspect, the two first AC electrode rails include a first inner AC electrode rail and a first outer AC electrode rail that extend from the interaction region, through the transition region, into a first non-interaction region; the two second AC electrode rails include a second inner AC electrode rail and a second outer AC electrode rail that extend from the interaction region, through the transition region, into a second non-interaction region that is spatially separated from the first non-interaction region; the first and second inner AC electrode rails are arranged between the first and second outer electrode rails; and, in the interaction region, the first and the second inner AC electrode rail are merged to one inner AC electrode rail, wherein the first and the second inner AC electrode rail extend, as one merged inner AC electrode rail, from the interaction region into the transition region.

According to an ninth aspect provided in addition to the eighth aspect, in the transition region, the first and the second inner AC electrode rail separate from each other at a furcation at which the one merged inner AC electrode rail splits into two AC electrode rails; and from the furcation and away from the one end of the interaction region, the distance between the first and the second inner AC electrode rail increases.

According to a tenth aspect provided in addition to any of the fifth to the ninth aspect, the ion trapping system comprises direct current (DC) electrodes arranged on the trap surface for moving: (i) the first ions along the first linear trapping zone, and/or (ii) the second ions along the second linear trapping zone.

According to an eleventh aspect provided in addition to any of the fifth to the tenth aspect: (i) in the interaction region, below the first linear trapping zone, there is a slit through a substrate of the trap surface that allows optical access of ions trapped in the first linear trapping zone; and/or (ii) in the interaction region, below the second linear trapping zone, there is a slit through the substrate of the trap surface that allows optical access of ions trapped in the second linear trapping zone.

According to a twelfth aspect provided in addition to any of the first to the fourth aspect, the AC electrodes include: (i) first AC electrodes that are arranged in three dimensions around the first linear trapping zone for generating the first linear trapping zone, and (ii) second AC electrodes that are arranged in three dimensions around the second linear trapping zone for generating the second linear trapping zone.

According to a thirteenth aspect provided in addition to the twelfth aspect, in the transition region, the distance between the first and the second AC electrodes increases away from the one end of the interaction region.

According to a fourteenth aspect provided in addition to the twelfth or the thirteenth aspect, the first AC electrodes comprise four first AC electrode rails forming a first linear trap; the second AC electrodes comprise four second AC electrode rails forming a second linear trap; in the interaction region, the first and the second AC electrode rails run besides each other; and in the transition region, a distance between the first and the second AC electrode rails increases away from the one end of the interaction region.

According to a fifteenth aspect provided in addition to the fourteenth aspect, the four first AC electrode rails include two first inner AC electrode rails and two first outer AC electrode rails, each of the four first AC electrode rails extending from the interaction region, through the transition region, into a first non-interaction region; the four second AC electrode rails include two second inner AC electrode rails and two second outer AC electrode rails, each of the four second AC electrode rails extending from the interaction region, through the transition region, into a second non-interaction region that is spatially separated from the first non-interaction region; one of the first inner AC electrode rails and one of the second inner AC electrode rails are arranged between one of the first outer electrode rails and one of the second outer electrode rails; and in the interaction region, the one first inner AC electrode rail and the one second inner AC electrode rail are merged to one inner merged AC electrode rail, wherein the one first and the one second inner AC electrode rail extend, as the one merged inner AC electrode rail, from the interaction region into the transition region.

According to a sixteenth aspect provided in addition to the fifteenth aspect, in the transition region, the one first inner AC electrode rail and the one second inner AC electrode rail separate from each other at a furcation at which the one merged inner AC electrode rail splits into two AC electrode rails; and, from the furcation and away from the one end of the interaction region, the distance between the one first and the one second inner AC electrode rail increases.

According to a seventeenth aspect provided in addition to any of the twelfth to the sixteenth aspect, the ion trapping system comprises: direct current (DC) electrodes arranged for moving: (i) the first ions along the first linear trapping zone, and/or (ii) the second ions along the second linear trapping zone.

According to an eighteen aspect a method for entangling ions is provided. The method comprises (i) generating, by applying alternating current (AC) voltages to AC electrodes of an ion trapping system, a first and a second mutually different linear trapping zone, wherein: (i) in an interaction region for performing quantum operations between one or more first ions trapped in the first linear trapping zone and one or more second ions trapped in the second linear trapping zone, the first and the second linear trapping zone run besides each other, and (ii) in a transition region in which the first and the second linear trapping zone lead away from one end of the interaction region, a distance between the first and the second linear trapping zone increases away from the one end of the interaction region; (ii) trapping the first ions in the first linear trapping zone, (iii) trapping the second ions in the second linear trapping zone; (iv) performing, while the first ions are in the first interaction zone and the second ions are in the second interaction zone, quantum operations between the first and the second ions; and (v) moving the first ions, within the first linear trapping zone, away from the first interaction zone through the transition region into a non-interaction zone of the first linear trapping zone.

Further dependent aspects, using any of the ion trapping systems provided by one of the second to the seventeenth aspect, are provided for the method according to the eighteen aspect.

**Claims**

1. An ion trapping system, comprising:

    alternating current, AC, electrodes arranged for generating a first and a second mutually different linear trapping zone; wherein in an interaction region for performing quantum operations between first ions trapped in the first linear trapping zone and second ions trapped in the second linear trapping zone, the first and the second linear trapping zone run besides each other, and in a transition region in which the first and the second linear trapping zone lead away from one end of the interaction region, a distance between the first and the second linear trapping zone increases away from the one end of the interaction region.

2. The ion trapping system according to claim 1, wherein

in another transition region in which the first and the second linear trapping zone lead away from another end of the interaction region, a distance between the first and the second linear trapping zone increases away from the other end of the interaction region, wherein
the other end of the interaction region is an end other than the one end, and
the other transition region is a region other than the transition region; and
the AC electrodes are arranged for generating:

- a third linear trapping zone, and
- a fourth linear trapping zone such that

the first, the third, the second, and the fourth linear trapping zone form, in this order, a single linear trapping zone that has the form of a closed loop.

3. The ion trapping system according to claim 1, wherein

the AC electrodes are arranged for generating a plurality of linear trapping zones, wherein said linear trapping zones form mutually different closed loops, and the first and the second linear trapping zone are segments of different linear trapping zones of the plurality of linear trapping zones; and
each of the linear trapping zones comprises:

- an interaction zone in which the linear trapping zone runs besides another linear trapping zone of the plurality of linear trapping zones, the interaction zone being provided for performing quantum operations between ions trapped in said linear trapping zone and ions trapped in said other linear trapping zone; and
- a non-interaction zone that is farther away from other linear trapping zones than the interaction zone of the linear trapping zone is away from the other linear trapping zones.

4. The ion trapping system according to claim 1, wherein

the AC electrodes are arranged for generating a plurality of mutually different third linear trapping zones, the third linear trapping zones including the second linear trapping zone and not including the first linear trapping zone;
the first linear trapping zone comprises:

- for each of the third linear trapping zones, an interaction zone for performing quantum operations between ions trapped in said interaction zone and ions trapped in the third linear trapping zone; and
- a plurality of non-interaction zones that are farther away from the third linear trapping zones than each of the interaction zones of the first linear trapping zone is away from the third linear trapping zones; and

each of the third linear trapping zones comprises:

- an interaction zone for performing quantum operations between ions trapped in the third linear trapping zone and ions trapped in the first linear trapping zone; and
- a non-interaction zone that is farther away from each linear trapping zone other than the third linear trapping zone than the interaction zone of the third linear trapping zone is away from the first linear trapping zone; and wherein

for each of the third linear trapping zones, there is a transition region in which a distance between the first linear trapping zone and the third linear trapping zone increases away from an end of the respective interaction region in which the first linear trapping zone and the third linear trapping zone run besides each other.

5. The ion trapping system according to any of claims 1 to 4, wherein

the AC electrodes are arranged on a trap surface; and
the AC electrodes form:

- a first linear surface trap for generating the first linear trapping zone, and
- a second linear surface trap for generating the second linear trapping zone.

6. The ion trapping system according to claim 5, wherein,
in the transition region, the distance between the first and the second linear surface trap increases away from the one end of the interaction region.

7. The ion trapping system according to claim 5 or 6, wherein

the AC electrodes comprise two first AC electrode rails forming the first linear surface trap; the AC electrodes comprise two second AC electrode rails forming the second linear surface trap; in the interaction region, the first and the second AC electrode rails run besides each other; and in the transition region, a distance between the first and the second AC electrode rails increases away from the one end of the interaction region.

8. The ion trapping system according to claim 7, wherein

the two first AC electrode rails include a first inner AC electrode rail and a first outer AC electrode rail that extend from the interaction region, through the transition region, into a first non-interaction region; the two second AC electrode rails include a second inner AC electrode rail and a second outer AC electrode rail that extend from the interaction region, through the transition region, into a second non-interaction region that is spatially separated from the first non-interaction region; the first and second inner AC electrode rails are arranged between the first and second outer electrode rails; and, in the interaction region, the first and the second inner AC electrode rail are merged to one inner AC electrode rail, wherein the first and the second inner AC electrode rail extend, as one merged inner AC electrode rail, from the interaction region into the transition region.

9. The ion trapping system according to claim 8, wherein

in the transition region, the first and the second inner AC electrode rail separate from each other at a furcation at which the one merged inner AC electrode rail splits into two AC electrode rails; and from the furcation and away from the one end of the interaction region, the distance between the first and the second inner AC electrode rail increases.

10. The ion trapping system according to any of claims 5 to 9, comprising: direct current, DC, electrodes arranged on the trap surface for moving:

- the first ions along the first linear trapping zone, and/or

- the second ions along the second linear trapping zone.

11. The ion trapping system according to any of claims 5 to 10, wherein,

in the interaction region, below the first linear trapping zone, there is a slit through a substrate of the trap surface that allows optical access of ions trapped in the first linear trapping zone; and/or in the interaction region, below the second linear trapping zone, there is a slit through the substrate of the trap surface that allows optical access of ions trapped in the second linear trapping zone.

12. The ion trapping system according to any of claims 1 to 4, wherein the AC electrodes include:

- first AC electrodes that are arranged in three dimensions around the first linear trapping zone for generating the first linear trapping zone, and - second AC electrodes that are arranged in three dimensions around the second linear trapping zone for generating the second linear trapping zone.

13. The ion trapping system according to claim 12, wherein, in the transition region, the distance between the first and the second AC electrodes increases away from the one end of the interaction region.

14. The ion trapping system according to claim 12 or 13, wherein

the first AC electrodes comprise four first AC electrode rails forming a first linear trap; the second AC electrodes comprise four second AC electrode rails forming a second linear trap; in the interaction region, the first and the second AC electrode rails run besides each other; and in the transition region, a distance between the first and the second AC electrode rails increases away from the one end of the interaction region.

15. A method for entangling ions, comprising:

generating, by applying alternating current, AC, voltages to AC electrodes of an ion trapping system, a first and a second mutually different linear trapping zone, wherein:

- in an interaction region for performing quantum operations between one or more first ions trapped in the first linear trapping zone and one or more second ions trapped in the second linear trapping zone, the first and the second linear trapping zone run besides each other, and
- in a transition region in which the first and the second linear trapping zone lead away from one end of the interaction region, a distance between the first and the second linear trapping zone increases away from the one end of the interaction region;

trapping the first ions in the first linear trapping zone,
trapping the second ions in the second linear trapping zone;
performing, while the first ions are in the first interaction zone and the second ions are in the second interaction zone, quantum operations between the first and the second ions; and moving the first ions, within the first linear trapping zone, away from the first interaction zone through the transition region into a non-interaction zone of the first linear trapping zone.

**Amended claims in accordance with Rule 137(2) EPC.**

1. An ion trapping system, comprising:

   alternating current, AC, electrodes (310, 320, 325, 335) arranged for generating a first (315) and a second (330) mutually different linear trapping zone; wherein
   in an interaction region (430) for performing quantum operations between first ions trapped in the first (315) linear trapping zone and second ions trapped in the second (330) linear trapping zone, the first (315) and the second (330) linear trapping zone run besides each other, and
   in a transition region (420) in which the first (315) and the second (330) linear trapping zone lead away from one end (431) of the interaction region (430), a distance (425, 426, 427) between the first (315) and the second (330) linear trapping zone increases away from the one end (431) of the interaction region (430).

2. The ion trapping system according to claim 1, wherein

   in another transition region (820) in which the first (315) and the second (330) linear trapping zone lead away from another end (432) of the interaction region (430), a distance between the first and the second linear trapping zone increases away from the other end (432) of the interaction region (430), wherein the other end (432) of the interaction region (430) is an end other than the one end (431), and the other transition region (820) is a region other than the transition region (420); and the AC electrodes (310, 320, 325, 335) are arranged for generating:

   - a third linear trapping zone (860), and
   - a fourth linear trapping zone (850) such that

the first (315), the third (860), the second (330), and the fourth (850) linear trapping zone form, in this order, a single linear trapping zone that has the form of a closed loop.

3. The ion trapping system according to claim 1, wherein

   the AC electrodes (310, 320, 325, 335) are arranged for generating a plurality of linear trapping zones (910, 920, 930), wherein said linear trapping zones (910, 920, 930) form mutually different closed loops, and the first and the second linear trapping zone are segments of different linear trapping zones of the plurality of linear trapping zones; and
   each of the linear trapping zones (910) comprises:

   - an interaction zone (961) in which the linear trapping zone (910) runs besides another linear trapping zone (920) of the plurality of linear trapping zones (910, 920, 930), the interaction zone (961) being provided for performing quantum operations between ions trapped in said linear trapping zone (910) and ions trapped in said other linear trapping zone (920); and
   - a non-interaction zone (410) that is farther away from other linear trapping zones (920, 930) than the interaction zone (961) of the linear trapping zone (910) is away from the other linear trapping zones (920, 930).

4. The ion trapping system according to claim 1, wherein

   the AC electrodes (310, 320, 325, 335) are arranged for generating a plurality of mutually different third linear trapping zones (1001, 1002), the third linear trapping zones (1001, 1002) including the second (1001, 1002) linear trapping zone and not including the first linear trapping zone (1000);
   the first linear trapping zone (1000) comprises:

   - for each of the third linear trapping zones (1001, 1002), an interaction zone (1051, 1061) for performing quantum operations between ions trapped in said interaction zone (1051, 1061) and ions trapped in the third linear trapping zone (1001, 1002); and
- a plurality of non-interaction zones (1040, 1055) that are farther away from the third linear trapping zones (1001, 1002) than each of the interaction zones (1051, 1061) of the first linear trapping zone (1000) is away from the third linear trapping zones (1001, 1002); and

each of the third linear trapping zones (1001, 1002) comprises:

- an interaction zone (1052, 1062) for performing quantum operations between ions trapped in the third linear trapping zone (1001, 1002) and ions trapped in the first linear trapping zone (1000); and
- a non-interaction zone that is farther away from each linear trapping zone (1000, 1001, 1002) other than the third linear trapping zone (1001, 1002) than the interaction zone (1052, 1062) of the third linear trapping zone (1001, 1002) is away from the first linear trapping zone (1000); and wherein

for each of the third linear trapping zones (1001, 1002), there is a transition region (1048, 1058) in which a distance between the first linear trapping zone (1000) and the third linear trapping zone (1001, 1002) increases away from an end of the respective interaction region (1050, 1060) in which the first linear trapping zone (1000) and the third linear trapping zone (1001, 1002) run besides each other.

5. The ion trapping system according to any of claims 1 to 4, wherein

the AC electrodes (310, 320, 325, 335) are arranged on a trap surface; and
the AC electrodes (310, 320, 325, 335) form:

- a first linear surface trap for generating the first linear trapping zone (315), and
- a second linear surface trap for generating the second linear trapping zone (330).

6. The ion trapping system according to claim 5, wherein,
in the transition region (420), the distance between the first and the second linear surface trap increases away from the one end (431) of the interaction region (430).

7. The ion trapping system according to claim 5 or 6, wherein

the AC electrodes (310, 320, 325, 335) comprise two first AC electrode rails (310, 320) forming the first linear surface trap;
the AC electrodes (310, 320, 325, 335) comprise two second AC electrode rails (325, 335) forming the second linear surface trap;
in the interaction region (430), the first (310, 320) and the second (325, 335) AC electrode rails run besides each other; and
in the transition region (420), a distance between the first (310, 320) and the second (325, 335) AC electrode rails increases away from the one end (431) of the interaction region (430).

8. The ion trapping system according to claim 7, wherein

the two first AC electrode rails (310, 320) include a first inner AC electrode rail (320) and a first outer AC electrode rail (310) that extend from the interaction region (430), through the transition region (420), into a first non-interaction region (410);
the two second AC electrode rails (325, 335) include a second inner AC electrode rail (325) and a second outer AC electrode rail (335) that extend from the interaction region (430), through the transition region (420), into a second non-interaction region (410) that is spatially separated from the first non-interaction region (410);
the first (320) and second inner (325) AC electrode rails are arranged between the first (310) and second (335) outer electrode rails; and,
in the interaction region (430), the first (320) and the second (325) inner AC electrode rail are merged to one inner AC electrode rail, wherein the first (320) and the second (325) inner AC electrode rail extend, as one merged inner AC electrode rail, from the interaction region (430) into the transition region (420).

9. The ion trapping system according to claim 8, wherein

in the transition region (420), the first (320) and the second (325) inner AC electrode rail separate from each other at a furcation (380) at which the one merged inner AC electrode rail splits into two AC electrode rails (320, 325); and
from the furcation (380) and away from the one end (431) of the interaction region (430), the distance (425, 426, 427) between the first (320) and the second (325) inner AC electrode rail increases.

**10.** The ion trapping system according to any of claims 5 to 9, comprising:

direct current, DC, electrodes (350, 355) arranged on the trap surface for moving:

- the first ions along the first linear trapping zone (315), and/or
- the second ions along the second linear trapping zone (330).

**11.** The ion trapping system according to any of claims 5 to 10, wherein,

in the interaction region (430), below the first linear trapping zone (315), there is a slit through a substrate of the trap surface that allows optical access of ions trapped in the first linear trapping zone (315); and/or
in the interaction region (430), below the second linear trapping zone (330), there is a slit through the substrate of the trap surface that allows optical access of ions trapped in the second linear trapping zone (330).

**12.** The ion trapping system according to any of claims 1 to 4, wherein
the AC electrodes include:

- first AC electrodes (310, 315) that are arranged in three dimensions around the first linear trapping zone (315) for generating the first linear trapping zone (315), and
- second AC electrodes (325, 335) that are arranged in three dimensions around the second linear trapping zone (330) for generating the second linear trapping zone (330).

**13.** The ion trapping system according to claim 12, wherein,
in the transition region (420), the distance between the first (310, 315) and the second (325, 335) AC electrodes increases away from the one end (431) of the interaction region (430).

**14.** The ion trapping system according to claim 12 or 13, wherein

the first AC electrodes (310, 315) comprise four first AC electrode rails forming a first linear trap;
the second AC electrodes comprise four second AC electrode rails (325, 335) forming a second linear trap;
in the interaction region (430), the first (310, 315) and the second (325, 335) AC electrode rails run besides each other; and
in the transition region (420), a distance between the first (310, 315) and the second (325, 335) AC electrode rails increases away from the one end (431) of the interaction region (430).

**15.** A method for entangling ions, comprising:

Generating (S1100), by applying alternating current, AC, voltages to AC electrodes (310, 320, 325, 335) of an ion trapping system, a first (315) and a second (330 )mutually different linear trapping zone, wherein:

- in an interaction region (430) for performing quantum operations between one or more first ions trapped in the first linear trapping zone (315) and one or more second ions trapped in the second linear trapping zone (330), the first (315) and the second (330) linear trapping zone run besides each other, and
- in a transition region (420) in which the first (315) and the second (330) linear trapping zone lead away from one end (431) of the interaction region (430), a distance (425, 426, 427) between the first (315) and the second (330) linear trapping zone increases away from the one end (431) of the interaction region (430);

trapping (S1110) the first ions in the first linear trapping zone (315),
trapping (S1110) the second ions in the second linear trapping zone (330);
performing (S1130), while the first ions are in the first interaction zone and the second ions are in the second interaction zone, quantum operations between the first and the second ions; and
moving (S1140) the first ions, within the first linear trapping zone (315), away from the first interaction zone through the transition region (420) into a non-interaction zone of the first linear trapping zone (410).

Memory region   Electrode segments

trapping zone
junction

Ions   Interaction region

**Fig. 1**

**Fig. 2**

Linear trapping zones

ions trapped in
different (adjacent)
trapping zones

AC electrodes

Ions trapped in
same trapping
zone

DC electrodes

first Linear Trapping
Zone 315

first inner AC
Electrode Rail 320

DC Electrodes 350

Controller 360

Circuitry
365

First outer AC
Electrode Rail 310

inner AC electrode
furcation 380

second inner AC
Electrode Rail 325

DC Electrodes 355

Merged region of AC
Electrode rails 320 and 325

Second outer AC
Electrode Rail 335

second linear
Trapping Zone 330

Fig. 3

Fig. 4

Section S2

Fig. 5

Electric field lines

Local minimum 530 of pseudo-potential corresponding to RF null 330

Local minimum 515 of pseudo-potential corresponding to RF null 315

36 $\mu m$

$d \approx 73\ \mu m$

Exemplary scale:

50 µm

Second outer AC Electrode Rail 335

DC Electrodes 355

First and second inner AC Electrode Rails 320 and 325

DC Electrodes 350

First outer AC Electrode Rail 310

Section S1

Local minimum 615 of
pseudo-potential
corresponding to RF null 315

**Fig. 6**

Exemplary scale:

50 µm

First inner AC
Electrode Rail 320

DC Electrodes 350

First outer AC
Electrode Rail 310

first RF null 315

ion qubit sub-register

Configuration for
inter-crystal gates

Interaction
region 430

Ion shuttling

Configuration for
intra-crystal gates

second RF null 330

**Fig. 7**

Fig. 8

Fig. 9

## Fig. 10a
"leaf"

first RF null 1015

transition
region 1020

second RF null 1030

## Fig. 10c
"tree"

"bus"-line

## Fig. 10b
"branch"

transition region
1058

RF null
1001

non-
interaction
zone 1040

interaction
zone 1052

RF null 1002

interaction
zone 1062

transition region
1048

interaction region
1050

interaction
zone 1051

interaction
region 1060

interaction
zone 1061

"bus"-line 1000

non-interaction
zone 1055

**Fig. 11**

S1100: generate first and
second RF nulls

S1110: trap first and
second ions in first and
second RF null, respectively

S1120: move first and
second ions in the
interaction region

S1130: perform inter-zone
operations

S1140: move first ions in
first non-interaction
zone/region

S1150: perform intra-zone
operations

**Fig. 12**

DC Electrodes 350

first Linear Trapping
Zone 315

first set of inner AC
electrode rails 320

Controller 360

Circuitry
365

First set of outer
AC electrode
rails 310

second set of inner AC
electrode rails 325

DC Electrodes 355

Exemplary AC voltage
configuration:

$+U_{ac}$   $-U_{ac}$

second linear
Trapping Zone 330

inner AC electrode
furcation 380

Second set of outer
AC electrode rails 335

Merged region of AC
electrode rails 320 and 325

**Fig. 13**

first non-interaction
region 410

transition region 420

first end
431

Section S2

Section S1  second non-interaction
region 450

distance 427
distance 426
distance 425

position 482

position 481

Exemplary scale:
100 μm

second
end 432

interaction region 430

**Fig. 14**
Section S2

DC Electrodes 350

Upper first and second inner AC
Electrode Rails 320 and 325

DC Electrodes 355

Local minimum 515 of
pseudo-potential
corresponding to RF null 315

Local minimum 530 of
pseudo-potential
corresponding to RF null 330

Electric
field lines

First set of outer AC
Electrode Rails 310

Second set of outer
AC Electrode Rails 335

Exemplary scale:
50 μm

43 μm

$d \approx 90\ \mu m$

DC Electrodes 350

DC Electrodes 355

Lower first and second inner AC Electrode Rails 320 and 325

**Fig. 15**
Section S1

DC Electrodes 355

Local minimum 630 of
pseudo-potential
corresponding to RF null 330

Second set of inner AC
Electrode Rails 325
(upper and lower rails)

Exemplary scale:
50μm

Second set of outer
AC electrode rails 335

DC Electrodes 355

Europäisches
Patentamt

European
Patent Office

Office européen
des brevets

# EUROPEAN SEARCH REPORT

**Application Number**

EP 24 16 3946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SPENCER D FALLEK ET AL: "Rapid Exchange Cooling with Trapped Ions", ARXIV.ORG, CORNELL UNIVERSITY LIBRARY, 201 OLIN LIBRARY CORNELL UNIVERSITY ITHACA, NY 14853, 5 February 2024 (2024-02-05), XP091680788, DOI: 10.1038/S41467-024-45232-Z | 1,3-11 | INV. G04F5/14 B82B1/00 B82B3/00 B82Y10/00 B82Y20/00 G01C19/60 |
| A | * paragraph [0002]; figure 1 * ----- | 2,12-14 | G01R33/26 G06N10/40 |
| A | CN 115 910 741 A (QUANTUM COMPUTING LLC) 4 April 2023 (2023-04-04) * abstract; figures 2,4 * ----- | 3,4,8-11 | G21K1/00 |
| X | Peter Maunz: "High Optical Access Trap 2.0", , 26 January 2016 (2016-01-26), XP055758350, DOI: 10.2172/1237003 Retrieved from the Internet: URL:https://prod-ng.sandia.gov/techlib-noauth/access-control.cgi/2016/160796r.pdf [retrieved on 2020-12-09] * paragraph [0001] - paragraph [0002]; figures 1,10,13 * ----- | 1,5-7 | |

**TECHNICAL FIELDS SEARCHED (IPC)**

G04F
B82B
B82Y
G01R
G01C
G06N
H05G
G21K

The present search report has been drawn up for all claims

| Place of search | Date of completion of the search | Examiner |
|---|---|---|
| The Hague | 26 July 2024 | Mérimèche, Habib |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 3946

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2024

| Patent document cited in search report | Publication date | Patent family member(s) | Publication date |
|---|---|---|---|
| CN 115910741 A | 04-04-2023 | CN 115910741 A | 04-04-2023 |
| | | CN 117423604 A | 19-01-2024 |
| | | EP 4138001 A2 | 22-02-2023 |
| | | EP 4318331 A2 | 07-02-2024 |
| | | JP 7507817 B2 | 28-06-2024 |
| | | JP 2023029308 A | 03-03-2023 |
| | | JP 2024029215 A | 05-03-2024 |
| | | TW 202328993 A | 16-07-2023 |
| | | TW 202414286 A | 01-04-2024 |
| | | US 2023057368 A1 | 23-02-2023 |
| | | US 2023420154 A1 | 28-12-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HOLZ, P. C** ; **AUCHTER, S.** ; **STOCKER, G** ; **VALENTINI, M** ; **LAKHMANSKIY, K.** ; **RÖSSLER, C** ; **BLATT, R**. 2D linear trap array for quantum information processing''. *Advanced Quantum Technologies*, 2020, vol. 3 (11), 2000031

- **HARLANDER, M** ; **LECHNER, R.** ; **BROWNNUTT, M. et al.** Trapped-ion antennae for the transmission of quantum information''.. *Nature*, 2011, vol. 471, 200-203, https://doi.org/10.1038/nature09800